# EUROPEAN PATENT SPECIFICATION

(11) **EP 2 075 955 B1**
(45) Date of publication and mention of the grant of the patent: **19.01.2011**
(21) Application number: 07816957.0
(22) Date of filing: 25.09.2007
(51) Int. Cl.: H04L 12/24, H04J 3/14

(54) **A METHOD AND APPARATUS FOR MONITORING NETWORK QUALITY**
VERFAHREN UND VORRICHTUNG ZUM ÜBERWACHEN DER NETZWERKQUALITÄT
PROCÉDÉ ET APPAREIL DE SURVEILLANCE DE LA QUALITÉ D'UN RÉSEAU

(30) Priority: 27.09.2006 CN 200610127895
(43) Date of publication of application: 01.07.2009
(73) Proprietor: Huawei Technologies Co., Ltd., Shenzhen, Guangdong Province 518129 (CN)
(72) Inventor: YAN, Jun, Shenzhen Guangdong 518129 (CN); ZHANG, Bo, Shenzhen Guangdong 518129 (CN); CHEN, Gen, Shenzhen Guangdong 518129 (CN)
(74) Representative: Thun, Clemens
(86) International application number: PCT/CN2007/070766
(87) International publication number: WO 2008/043293

(56) References cited:
- EP-A- 1 083 690
- US-A1- 2003 097 472
- US-A1- 2003 097 472
- US-A1- 2003 231 638
- US-A1- 2005 028 043
- US-A1- 2005 086 555
- DEBORAH BRUNGARD MAARTEN VISSERS: "DRAFT NEW RECOMMENDATION G.709, FOR APPROVAL; C 16" ITU-T DRAFT STUDY PERIOD 2001-2004, INTERNATIONAL TELECOMMUNICATION UNION, GENEVA ; CH, vol. STUDY GROUP 15, 1 October 2000 (2000-10-01), pages 1-85, XP017413363
- JUERGEN HEILES HOFMANNSTR 51 D-81359 MUNICH GERMANY: "Draft new Recommendation G.798; D.58" ITU-T DRAFT STUDY PERIOD 2001-2004, INTERNATIONAL TELECOMMUNICATION UNION, GENEVA ; CH, vol. STUDY GROUP 15, 5 February 2001 (2001-02-05), pages 1-169, XP017416791

## Description

### BACKGROUND OF THE INVENTION

### Field of the Technology

The present invention relates to a network monitoring technique, in particular to a method and an apparatus for monitoring network quality.

### Background of the Invention

There are many different network operators all over the world, and they own their respective optical fibers laid by themselves and network devices, so that the management, maintenance, and fault location of the network devices in the individual subnetworks may be handled by themselves. However, in order to achieve a larger coverage scope, it is necessary to connect the network devices of many different operators to form a larger network, so as to provide services for users. In this case, one end-to-end user service may be transmitted over different subnetworks of many different operators. At this time, a certain mechanism is required to differentiate the network quality situations of different operators.

In order to evaluate the network quality of the subnetworks operated by different operators, a tandem connection monitoring (TCM) concept has been proposed, which aims at monitoring the subnetworks, and can be utilized to monitor the quality of a part of the trail where the end-to-end service is transmitted.

Considering the principle for realizing the TCM, some overheads are added in a format of an optical channel data unit (ODU) frame, in which the added overheads are rewritten at a transmission source end, and the overheads are extracted and monitored at a sink end. Therefore, based on the corresponding defects generated to the overheads, the continuity, connectivity, signal quality, and the like are monitored.

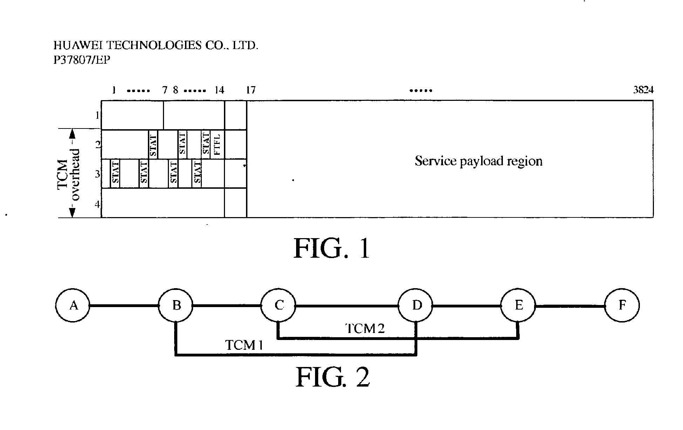

As shown in FIG 1, a format of an optical transport network (OTN) frame totally includes 4 rows and 3824 columns, so as to form a block frame structure based on bytes, in which the 17^{th} column to the 3824^{th} is a payload region, including service signals; the 1^{st} column to the 16^{th} column is an overhead part, and the TCM overheads defined on the ODU layer of the OTN are in the 1^{st} column to the 14^{th} column. Totally, 6 levels of TCM overheads are defined, that is to say, at most six subnetworks can be monitored at the same time on one end-to-end trail, in which the TCM6 overhead is located on the 5^{th} column to the 7^{th} column of the second row, TCM5 is located on the 8^{th} column to the 10^{th} column of the second row, TCM4 is located on the 11^{th} column to the 13^{th} column of the second row, TCM3 is located on the 1^{st} column to the 3^{rd} column of the third row, TCM2 is located on the 4^{th} column to the 6^{1h} column of the third row, and TCM1 is located on the 7^{th} column to the 9^{th} column of the third row.

Each TCM includes the following contents. A trail trace identifier (TTI) is carried as a first byte, so as to monitor whether a transmission trail is correct or not, in which the source end inserts a country code, an operator code, and an access point code for a unique identification in the field; the sink end pre-configures an expected value of a data receiving trail. If the expected value is the same as the TTI of the actual transmission trail, it indicates that the transmission trail is correct; otherwise, an alarm information of a trace identifier mismatch (TIM) defect is reported to a network management server, and meanwhile a backward defect indication (BDI) is inserted back, and an alarm indication signal (AIS) may be inserted, which is optional for the user. A bit interleaved parity-8 (BIP8) is carried as a second byte, so as to check whether the service data of the payload region is correct or not. The source end inserts a check value in the second byte, and the sink end computes a check value of the received data, and compares the calculated check value with that inserted by the source end, in which if they are the same, it indicates that the received data is correct; otherwise, an alarm information is sent to the network management server, and meanwhile, a backward error indication (BEI) is inserted back. In a third byte, the 1 bit to 4 bit are the BEI, for indicating that an error code occurs on a remote end, and the 5 bit is the BDI, for indicating that a defect alarm occurs on a remote end; the 6 bit to 8 bit are a state (STAT) field, in which when the field is 000, it represents that a loss of tandem connection (LTC) is detected, and meanwhile, the BDI is inserted back; when the field is 101, it represents a lock (LCK) signal, which is usually utilized by the operations for management, but is not allowed to be used by the user, and meanwhile, the BDI is inserted back and the AIS is inserted; when the field is 111, it represents the AIS, which is adapted to restrain a defect alarm from the downstream, and after the AIS is inserted, all the TCM fields are set to 1 correspondingly, so as to locate the source of the alarm; when the field is 110, it represents that an open connection indication (OCI) defect is detected, that is, no service signal is detected in the payload region, meanwhile, the BDI is inserted back, and the AIS is inserted.

Currently, the usage interface of the TCM is provided to the user, and the user determines the allocation and usage of the TCM; otherwise, all the overhead fields of the TCM are set to 0. The functions may set on a network node device, that is, the TCM overhead is set at corresponding bits of a frame structure according to the TCM level and mode. Particularly, the TCM level and mode at a certain direction may be set, the TCMs for receiving and transmitting services from two different directions need to be set respectively, that is to say, as for each node, a source direction may be set to a certain level and a certain mode, and a sink direction may be set to a certain level and a certain mode.

The source direction for transmitting data has two modes, namely, an OPERATIONAL mode and a TRANSPARENT mode. When the TCM of a certain level is set to the OPERATIONAL mode, the TCM of the level is rewritten; for example, the TTI, BIP8, BEI, BDI, and other overheads are inserted. When the TCM of a certain level is set to the TRANSPARENT mode, the TCM of the level is not processed.

The sink direction for receiving data has three modes, namely, an OPERATIONAL mode, a TRANSPARENT mode, and a MONITOR mode. When the TCM of a certain level is set to the OPERATIONAL mode, the TCM of the level is monitored, for example, the BIP8, BEI, BDI, TTI, and other overheads are extracted and monitored, corresponding defects are generated, and the subsequent action is processed, for example, the generation of the AIS. When the TCM of a certain level is set to the MONITOR mode, the TCM of the level is monitored, for example, the BIP8, BEI, BDI, TTI, and other overheads are extracted and monitored, corresponding defects are generated, but the subsequent action is not processed. When the TCM of a certain level is set to the TRANSPARENT mode, the TCM of the level is not processed. As for the bi-directional services, the TCM of each direction must be set respectively.

Recently, the processing operation on the TCM has the following disadvantages.

Firstly, as shown in FIG 2, one end-to-end service trail is shown, which passes through the nodes of ABCDEF, and this service is named as Service 1. The TCM is allocated for Service 1 in the following manner: the TCM1 is B→D and the intermediate node is C, and the TCM2 is C→E and the intermediate node is D. It is assumed that the TCM2 domain requires a LCK signal, that is, the LCK for the TCM2 is inserted at the node C. As a result, the TCM1_LCK is detected at the node D, and the TCM2_AIS is detected at the node E. The reason is that, after the node D detects the TCM1_LCK, the AIS is inserted, so that all the TCM fields are set to 1, and the TCM2_LCK inserted at the node C is also set to 1. Therefore, it can only detect the AIS at the node E, but cannot identify the node where the defect occurs, as well as the type of the defect. The essential reason for the above problem lies in that, a feedback about the reason for inserting the AIS cannot be given in the prior art, and thus, even if it gets to know that the defect occurs, it cannot clearly identify the type of the defect or locate the defect, thereby reducing the TCM precision for monitoring the network quality.

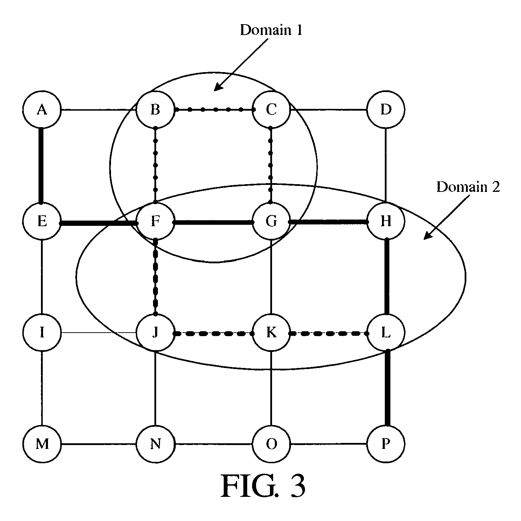

In addition, FIG. 3 shows a network topology with 16 nodes. In the network, there is an end-to-end service, from the node A to a node P passing through nodes of EFGHL, as shown by bold lines in FIG 3. The network includes two domains, BCFG belongs to a domain 1, and FGHJKL belongs to a domain 2. On the end-to-end trail, two levels of TCMs are set, in which a usage scope of the TCM1 is FG, and a usage scope of the TCM2 is FGHL. It is assumed that a subnet connection/sub-layer (SNC/S) protection is set in the network, that is, the data is transmitted between two nodes via active and standby trails, in which the data is transmitted to both the active and standby trails at a source node, the TCM overhead is generated, and the data is selected to be received at a sink node according to the defect situation monitored by the TCMs of the two trails. If a defect occurs at the active trail, the data transmitted via the standby trail is received, and the subsequent data transmission is performed via the standby trail, and vice versa. The above manner is called the SNC/S protection switching. In FIG. 3, the active and standby trails between F and G are respectively FG and FBCG, the active and standby trails between F and L are respectively FGHL and FJKL, and the AIS insertion function for the TIM is disabled by the user. In this manner, the node F serves as the source for both the TCM1 and the TCM2 at the same time. It is assumed that the processing sequence at the node F is that the TCM1 is firstly processed and then the TCM2 is processed. The TCM1 is realized before the cross connection, and the TCM2 is realized after the cross connection. However, due to the error of the cross-connect unit, among the three services transmitted from the node F, the ODU services originally set to be transmitted towards the node B direction and the node G direction are both connected to other directions, only the ODU service towards the node J direction is correct, and then passes through the source function of the TCM2. As a result, the service of the node J direction is normal, and the processing of the TCM2 overhead thereof is also normal. The services of the node G direction and the node B direction are incorrect, the TCM1 overhead is not initialized, and the TCM2 overhead is normally processed. At this time, it may be found at the node G that the LTC alarm of the TCM1 is detected on both the active and standby services, that is to say, the signal qualities for the active and standby trails are the same, but not switched. Meanwhile, the TIM alarm is detected at the node G in both the active and standby trails, but the AIS function for the TIM is disabled by the user, so the node G does not insert any signal indication to the downstream. At this time, it may be found at the node L that the TCM2 of both the FGHL trail and the FJKL trail is normal, and is not switched. Actually, at this time, only the service of the FJKL direction on the standby trail is normal, so the service of the standby path should be selected. The essential reason for this problem is that the node G cannot automatically insert the AIS according to the LTC. In addition, the settings of relations among the TCM functions of different levels and relations between the TCM functions and the cross connection function, for example, setting which TCMs to be realized before the cross connection, which TCMs to be realized after the cross connection, and which TCMs to affect other TCMs or to be affected by other TCMs, may result in different TCM monitoring scopes and different protection switching results, in which some results are correct and expected by the user, but others are incorrect and should be avoided. However, in the prior art, an interface for setting or altering the relations among the TCM functions of different levels and relations between the TCM functions and the cross connection function is not provided, so that the users cannot perform corresponding setting according to their own demands, thereby resulting in the uncontrollability of the TCM network monitoring in the prior art.

The above poor precision and uncontrollability problems of the TCM monitoring of the network quality in the prior art seriously affect the defect monitoring precision.
D1(XP017413363) discloses ODUk Tandem Connection Monitoring Activation/Deactivation coordination protocol. The ODUk tandem connection monitoring activation and deactivation coordination protocol supports hitless activation and deactivation of two peer Tandem Connection-Connection Monitoring End Points(TC-CMEP), one at each end of a monitored connection. D1 also discloses the definition of three types of TCM Activation and two types of TCM Deactivation. And D1 further discloses the TCM ACT message structure and indicates the specific field coding and their meanings of the TCM ACT message.
D2(XP017416791) discloses the ODUkT trail termination function ODUkT_TT. The ODUkP_TT function terminates the top of stack level of Tandem Connection Monitoring(TCM) overhead of the ODUk overhead to determine the status of a ODU TCM sub-layer trail. Furthermore, the ODUkT_TT function provides read/write access to the TCM ACT signal in the ODUk overhead for the Tandem Connection Monitor Plane(TCMCP) function that can be connected to an ODUkT_TT. And D2 further discloses the detection or the Provisioning errors. The automatic TOS mechanism supports only nested or cascaded tandem connection monitors. Due to provisioning or equipment errors, it could be possible for a "request for activation" of a new tandem connection monitor to potentially result in an overflow condition, in which an existing TCM level would b e pushed beyond 6, or to result in an overlap situation , which would lead to erroneous TCM data, and consequent alarms or other undesirable behaviors. In order to prevent these occurrences, the TCM activation process requires that intermediate TC-CMEP's analyse any passing TCM request and return messages, and write appropriate condition indications in the ACT message stream. During the TCM activation process, once a TCM is activated, tandem connection monitoring proceeds normally, with a TCM source and sink operating in each transmission direction.

### SUMMARY OF THE INVENTION

Accordingly, the present invention is directed to a method and an apparatus for monitoring a network, thereby improving the precision for the network quality monitoring.

In order to achieve the above objects, the present invention provides a method for monitoring network quality, which includes the following steps: configuring a TCM at a network node device, wherein the configuring the TCM comprises: configuring an application scope of the TCM of each level, and configuring relations among a plurality of TCM functions and relations between the plurality of TCM functions and a cross connection function; configuring to enable or disable a subsequent action of an LTC, and/or configuring to enable or disable the TCM of each level; and performing the TCM by the network node device according to the configuration, wherein the performing the TCM further comprises: monitoring defects of the TCM of each level according to the relations among the plurality of TCM functions and relations between the plurality of TCM functions and the cross connection function and based on an execution sequence corresponding to relations.

The present invention further provides an apparatus for monitoring network quality, which includes: a monitoring control module, adapted to configure a TCM, configure to enable or disable a subsequent action of an LTC, and/or configure to enable or disable the TCM of each level , wherein the configuring the TCM comprises: configuring an application scope of the TCM of each level, and configuring relations among a plurality of TCM functions and relations between the plurality of TCM functions and a cross connection function; and a monitoring execution module, adapted to perform the TCM according to the configuration, wherein the performing the TCM comprises: monitoring defects of the TCM of each level according to the relations among the plurality of TCM functions and relations between the plurality of TCM functions and the cross connection function and based on an execution sequence corresponding to relations.

In the present invention, a fault indication code for fault type and fault location (FTFL) is extended, in which the fault indication code is adapted to indicate the reasons for the AIS insertion, so as to avoid the circumstance that it fails to identify the node where the defect occurs or the type of the defect even though the AIS is detected. Furthermore, in the present invention, the affecting relations among TCMs of different levels can be configured, so that the user can pre-configure the relation between the server layer and the client layer among the TCMs of different levels according to the practical network situation, so as to prevent the incorrect affecting relation from resulting in an incorrect TCM monitoring result and further resulting in incorrect protection switching. Furthermore, in the present invention, location relations among the TCM of each level can be configured, that is, the location of the TCM before or after the ODU cross-connect unit can be configured, and a management interface is provided for the user to set the location of the TCM of each level, so as to precisely locate the monitoring position. Furthermore, in the present invention, the processing sequence for the TCMs of different levels can be pre-configured, so as to prevent different processing sequences from resulting in different TCM monitoring results and further resulting in different protection switching situations. In addition, in the present invention, the LTC, LCK, and OCI AIS insertion can be configured, and after the configuration is completed, the TCM of each level is uniformly enabled or disabled, so that the user can perform the corresponding configurations according to his/her own demands and the actual network situation, and it is ensured that the network node device processes the TCM of each level according to an execution sequence required by the user.

### BRIEF DESCRIPTION OF THE DRAWINGS

FIG. 1 is a format of an OTN frame in the prior art;

FIG. 2 is a structural view of an end-to-end service in the prior art;

FIG. 3 shows a network topology with 16 nodes in the prior art;

FIG. 4 is a structural view of an apparatus for monitoring network quality according to a first embodiment of the present invention;

FIG. 5 is a flow chart of a method for monitoring network quality according to the first embodiment of the present invention;

FIG 6 shows an atomic function model of setting a relation between TCM functions for realizing the TCM trail maximum monitoring and the cross connection according to the first embodiment of the present invention;

FIG 7 shows an atomic function model of setting a relation between TCM functions for realizing a protection switching based on the TCM overhead and the cross connection according to the first embodiment of the present invention;

FIG. 8 shows an atomic function model that signal failure information is not transferred among different configured TCM layers according to the first embodiment of the present invention;

FIG. 9 shows an atomic function model of the first embodiment of the present invention;

FIG 10 shows a network topology of a second embodiment of the present invention;

FIG. 11 shows an atomic function model of a service A according to the second embodiment of the present invention;

FIG 12 shows an atomic function model of a service B according to the second embodiment of the present invention; and

FIG. 13 shows an atomic function model of a service C according to the second embodiment of the present invention.

### DETAILED DESCRIPTION OF THE EMBODIMENTS

In order to make the objectives, technical solutions, and advantages of the present invention more comprehensible, a further description of the present invention is given below with reference to the accompanying drawings.

In the present invention, a fault indication code for fault type and fault location (FTFL) is extended, in which the fault indication code is adapted to indicate the reasons for the AIS insertion, so as to avoid the circumstance that it fails to identify the node where the defect occurs or the type of the defect even though the AIS is detected. Furthermore, in the present invention, the affecting relations among TCMs of different levels can be configured, so that the user can pre-configure the relation between the server layer and the client layer among the TCMs of different levels according to the practical network situation, so as to prevent the incorrect affecting relation from resulting in an incorrect TCM monitoring result and further resulting in incorrect protection switching. Furthermore, in the present invention, location relations among the TCM of each level can be configured, that is, the location of the TCM before or after the ODU cross-connect unit can be configured, and a management interface is provided for the user to set the location of the TCM of each level, so as to precisely locate the monitoring position. Furthermore, in the present invention, the processing sequence for the TCMs of different levels can be pre-configured, so as to prevent different processing sequences from resulting in different TCM monitoring results and further resulting in different protection switching situations. In addition, in the present invention, the LTC, LCK, and OCI AIS insertion can be configured, and after the configuration is completed, the TCM of each level is uniformly enabled or disabled, so that the user can perform the corresponding configurations according to his/her own demands and the actual network situation, and it is ensured that the network node device processes the TCM of each level according to an execution sequence required by the user.

First Embodiment

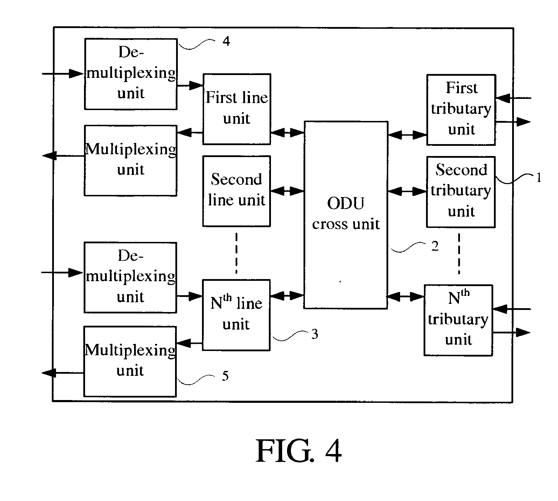

FIG. 4 is a structural view of an apparatus for monitoring network quality according to a first embodiment of the present invention. The apparatus for monitoring the network quality includes tributary units 1, an ODU cross-connect unit 2, line units 3, de-multiplexing units 4, and multiplexing units 5. In the present invention, a monitoring control module and a monitoring execution module mainly execute various functions for monitoring the network quality of the present invention. Referring to FIG. 4, the monitoring control module and the monitoring execution module may be set in at least one tributary unit and/or at least one line unit.

Referring to FIG. 4, in the source direction,, the tributary unit 1 receives a signal transmitted from a client side, adapts and inserts an overhead, and then transmits the signal to the ODU cross-connect unit 2. In a downlink service, the tributary unit 1 receives a signal transmitted from the ODU cross-connect unit 2, deadapts and terminates the overhead, and transmits the signal to the client side. Furthermore, the TCMs of different levels are pre-configured, including configuring an application scope of the TCM, configuring relations among a plurality of TCM functions and relations between the TCM functions and the cross connection function, configuring a usage manner of the TCM, and configuring the management of the TCM. The present invention enables to configure to enable or disable the subsequent action of the LTC, configure to enable or disable the TCM of each level, and extend the fault indication code of the FTFL.

When a signal is transmitted from the client side, the tributary unit 1 performs the following processing operations.

An adaptation source from an ODU path to a regenerator section (ODUkP/RS_A_So) adapts a client signal of the synchronous digital hierarchy (SDH) regenerator section to an ODU path signal. An ODU path trail terminal source (ODUkP-TT-So) is adapted to insert an overhead of an end-to-end path in the ODU path signal. An adaptation source from the tandem connection sub-layer to the ODU (ODUkT/ODUk_A_So) adapts the ODU path signal to the signal of the ODU tandem connection sub-layer. An ODU tandem connection sub-layer trail terminal source (ODUkT_TT_So) is adapted to insert an overhead of the ODU tandem connection sub-layer in the signal of the sub-layer.

An OTN device is divided to several layers logically, including an ODU layer, an OTU layer, and an optical channel (OCh) etc, in which the ODU layer is further divided to an ODUkP sub-layer and an ODUkT sub-layer. Each signal is correspondingly adapted in each layer and added with the overhead of the corresponding layer, for example, in the ODUkT sub-layer, the TCM overheads are added, for example, TTI, BDI, BEI, BIP8, and the like are inserted.

After the above adaptation and adding of overheads, the tributary unit 1 transmits the signal to the cross-connect unit 2, in which the TCM functions may include one or more levels, and at most six levels of TCM functions can be processed at the same time.

When the signal is transmitted from the ODU cross-connect unit 2 side, the tributary unit 1 performs the following processing operations.

An ODU tandem connection sub-layer trail terminal sink (ODUkT_TT_Sk) is adapted to terminate the overhead of the ODU tandem connection sub-layer in the signal of the sub-layer. An adaptation sink from the ODU tandem connection sub-layer to the ODU (ODUkT/ODUk_A_Sk) deadapts the signal of the ODU tandem connection sub-layer to the ODU path signal. An ODU path trail terminal sink (ODUkP_TT_Sk) is adapted to terminate the overhead of the path in the ODU path signal. An adaptation sink from the ODU path to the regenerator section (ODUkP/RS_A_Sk) deadapts the ODU path signal to the regenerator section client signal, and then transmits the regenerator section client signal to the client side. The TCM functions may include one or more levels, and at most six levels of TCM functions can be processed.

The ODU cross-connect unit 2 is adapted to finish the cross connection function of ODU layer signals. The function includes a routing function, and the routing function further includes a dual transmission/selective receiving function. The routing function means to transmit a signal transmitted from any one line unit or any one tributary unit to another line unit or tributary unit, and the selective receiving function means to selectively receive the data according to the TCM monitoring situation.

The line units 3 are adapted to receive a signal of the de-multiplexing units 4, deadapt and extract the overhead, transmit the signal to the ODU cross-connect unit 2, and adapted to receive a signal of the ODU cross-connect unit 2, adapt and insert the overhead, and transmit the signal to the multiplexing units 5. Furthermore, the TCMs of different levels can be pre-configured, and it enables to configure to enable or disable the subsequent action of the LTC, configure to enable or disable the TCM of each level, and extend the fault indication code of the FTFL.

When a signal is transmitted from the ODU cross-connect unit 2, the line units 3 perform the following processing operations.

An adaptation source from the ODU tandem connection sub-layer to the ODU (ODUkT/ODUk_A_So) adapts an ODU signal to a signal of the ODU tandem connection sub-layer. An ODU tandem connection sub-layer trail terminal source (ODUkT_TT_So) is adapted to insert the overhead of the ODU tandem connection sub-layer in the ODU signal. An adaptation source from the ODU to an optical channel transporting unit (OTUk/ODUk_A_So) adapts the ODU signal to a signal of the optical channel transporting unit layer. An optical channel transporting unit trail terminal source (OTUk_TT_So) is adapted to insert the overhead of the optical channel transporting unit layer in the signal of the optical channel transporting unit layer. An adaptation source from the optical channel transporting unit to an optical channel (OCh/OTUk_A_So) adapts the signal of the optical channel transporting unit layer to a signal of an optical channel layer. An optical channel trail terminal source (OCh_TT_So) is adapted to insert the overhead of the optical channel layer in the signal of the optical channel layer, and transmit the signal to the multiplexing units 5 of a line side. The TCM function may include one or more levels, and at most six levels of TCM functions can be processed.

When a signal is transmitted from the de-multiplexing units 4 of the line side, the line units 3 perform the following processing operations.

An optical channel trail terminal sink (OCh_TT_Sk) is adapted to terminate the overhead of the optical channel layer in a signal of the optical channel layer. An adaptation sink from the optical channel to the optical channel transporting unit (OCh/OTUk_A_Sk) deadapts the signal of the optical channel layer to the signal of the optical channel transporting unit layer. An optical channel transporting unit trail terminal sink (OTUk_TT_Sk) is adapted to terminate the overhead of the optical channel transporting unit layer in the signal of the layer. An adaptation sink from the optical channel transporting unit to the ODU (OTUk/ODUk_A_Sk) adapts the signal of the optical channel transporting unit layer to a signal of an ODU path sub-layer. An ODU tandem connection sub-layer trail terminal sink (ODUkT_TT_Sk) is adapted to terminate the overhead of the ODU tandem connection sub-layer in the signal of the sub-layer. An adaptation sink from the ODU tandem connection sub-layer to the ODU. (ODUkT/ODUk_A_Sk) deadapts the signal of the ODU tandem connection sub-layer to the ODU signal, and then transmits the signal to the ODU cross-connect unit 2. The TCM function may include one or more levels, and at most six levels of TCM functions can be processed.

In addition, when an intermediate node of the end-to-end trail dispatches the ODU, the line unit receives a signal transmitted from the de-multiplexing unit, deadapts and terminates the overhead, and transmits the signal to the ODU cross-connect unit, and the line unit receives a signal transmitted from the ODU cross-connect unit, adapts and inserts the overhead, and transmits the signal to the multiplexing unit.

The de-multiplexing unit 4 is adapted to divide a multi-wavelength signal into a plurality of optical channel signals and transmit the optical channel signals to a plurality of line units 3.

The multiplexing unit 5 is adapted to combine the plurality of optical channel signals from the plurality of line units 3 together and transmit the signal to an optical fiber for transmission.

In one device, there may be a plurality of tributary units 1 and a plurality of line units 3, but only three of them are respectively shown in FIG. 4.

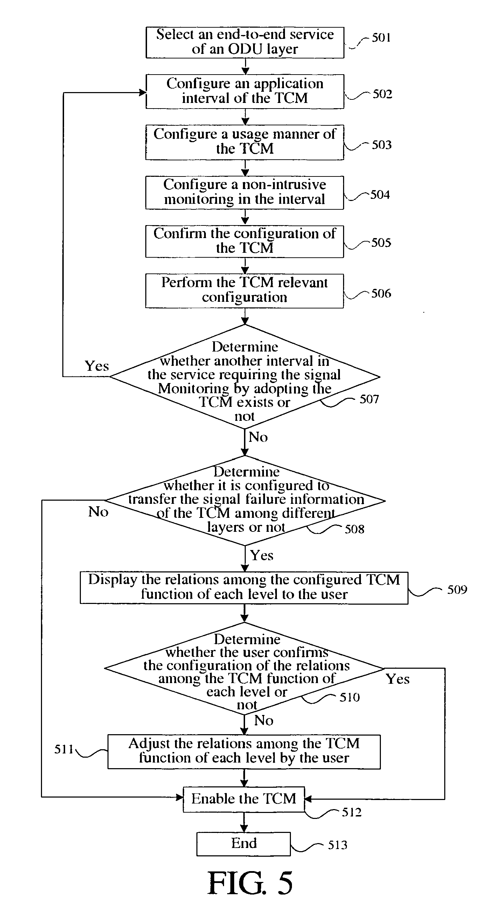

FIG 5 is a flow chart of a method for monitoring network quality according to the first embodiment of the present invention. The method of the present invention has made some improvements on the method for monitoring network quality in the prior art, in which mainly the relations among the plurality of TCM functions and relations between the plurality of TCM functions and the cross connection function are configured, whether the signal failure information of the TCM is transferred among different layers or is not configured, whether the LCK is allowed to be manually inserted or is not configured, and the fault indication code of the FTFL is extended to indicate the reasons for the AIS insertion. Furthermore, it is further configured whether to enable the subsequent action of the LTC or not, and a graphical interface manner is adopted to support the user to initiatively adjust and confirm the relations among the TCM functions of different levels. Finally, it further configures to enable or disable the configured TCM of each level. The method includes the following steps.

In Step 501, an end-to-end service of an ODU layer is selected, in which the service may be uni-directional or bi-directional. The quality of any selected service can be monitored by adopting the TCM.

In Step 502, an application scope of the TCM is allocated. Particularly, a source node and a sink node for applying the TCM of a certain level are designated, and at most six levels may exist. As for the bi-directional service, both the scope and the level configuration are bi-directionally applied at the same time. This step aims at monitoring the network quality of the different network domains, in which each network domain where the service is transmitted may correspond to one TCM level. Furthermore, the relations among the plurality of TCM functions and relations between the plurality of TCM functions and the cross connection function are configured.

After the application scope of the TCM and the relations among the plurality of TCM functions and relations between the plurality of TCM functions and the cross connection function have been configured, during the subsequent process of executing the TCM monitoring, the tributary units or the line units of the network node device monitor the defects of the TCM of each level according to the relations among the plurality of TCM functions and between the plurality of TCM functions and the cross connection function based upon an execution sequence corresponding to such relations. Particularly, the overhead is inserted at the source node, and the inserted overhead is extracted at the sink node. The TCMs of different levels are executed based on the configuration sequence, for example, a source end firstly executes a client layer, then executes a server layer, and firstly executes a TCM before the cross connection, then executes a TCM after the cross connection, whereas a sink end firstly executes the server layer, then executes the client layer, and firstly executes the TCM after the cross connection, and then executes the TCM before the cross connection.

In the embodiment of the present invention, by means of configuring the relations between the TCM of each level and the cross connection function, different application scenarios can be realized.

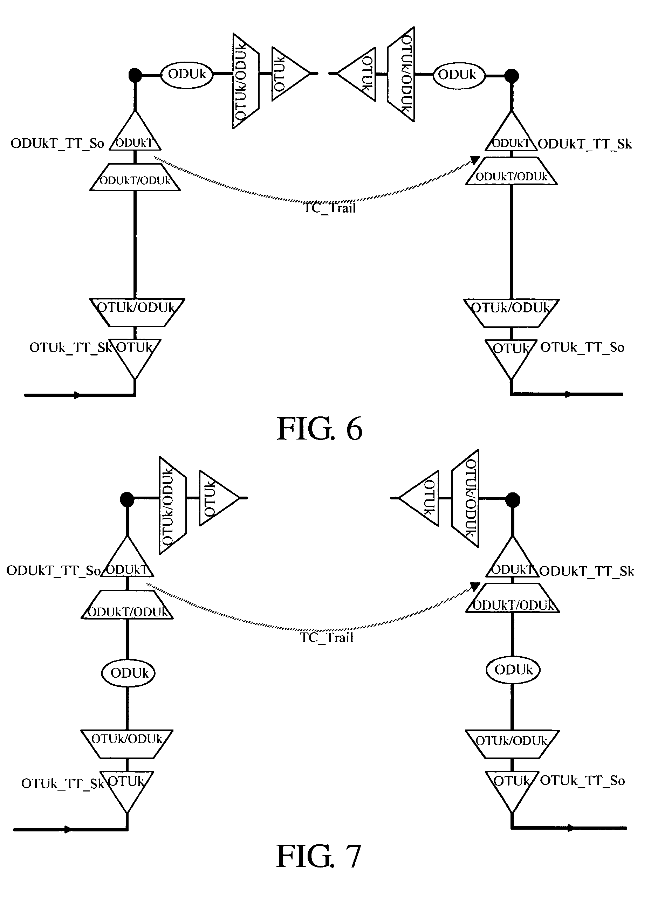

In a first scenario shown in FIG 6, the TCM source is located before the cross connection, and the TCM sink is located after the cross connection, so as to realize the TCM trail maximum monitoring, that is, monitor the whole transporting trail, including the cross connection function.

In a second scenario shown in FIG. 7, the TCM source is located after the cross connection, and the TCM sink is located before the cross connection, that is, the TCM monitor does not cover the cross connection function, so as to realize the SNC/S protection switching based on the TCM overhead. The reason is that the cross connection function enables to switch the ODUk signal from the working path to the protecting path according to the TCM monitoring result.

In Step 503, a usage manner of the TCM is configured. In detail, the configuration of the usage manner includes configuring whether to perform the maintenance signal insertion on the subsequent service trail or not, here the maintenance signal refers to the AIS, whether to transfer the signal failure information of the TCM among different layers or not, and whether to adopt the signal failure information and the signal degradation information as the conditions for the protection switching.

The signal failure information and the signal degradation information both indicate that certain defects occur to the signal. Particularly, when the TIM defect, LTC defect, LCK defect, AIS defect, and OCI defect occur, it indicates that a signal failure occurs to the signal, and when the transport error rate detected by the BIP8 exceeds a threshold value, it indicates that a signal degradation occurs to the signal.

After the usage manner of the TCM is configured, the subsequent process for executing the TCM monitoring includes the following steps. If it is configured to perform the maintenance signal insertion on the subsequent service trail, when monitoring the defects, the tributary units or the line units of the network node device execute the maintenance signal insertion. If it is configured to transfer the signal failure information of the TCM among different layers, when monitoring the defect, the tributary units or the line units of the network node device transfer the signal failure information to the TCM of the subordinate levels. If it is configured to adopt the signal failure information as the condition for protection switching, when the tributary units or the line units of the network node device monitors the defect, the cross-connect unit executes the protection switching.

Under the situation of enabling to perform the AIS insertion on the subsequent service trail, the reason of the AIS insertion is shown through the FTFL. In the fault indication code of the FTFL, a field for representing the reason of the AIS insertion is added. The FTFL is located in the 2^{nd} row and the 14^{th} column of the frame structure as shown in FIG 1. The extended FTFL is as shown in the following table.

**Table 1**

| Bit 1234 | | Bits 5678 | |
|---|---|---|---|
| 0000 | PM | 0000 | No fault |
| 0001 | TCM1 | 0001 | Signal Failure |
| 0010 | TCM2 | 0010 | Signal Degradation |
| 0011 | TCM3 | 0011 | ODUk(T)-TIM |
| 0100 | TCM4 | 0100 | ODUk(T)-LTC |
| 0101 | TCM5 | 0101 | ODUk(T)-LCK |
| 0110 | TCM6 | 0110 | ODUk(T)-OCI |
| 0111-1111 | Reserved | 0111 | ODUk(T)-AIS |
| | | 1000-1111 | Reserved |

In the extended FTFL, the reason of the AIS insertion is added, for example, TIM, LTC, and OCI etc., and an identifier of the TCM of a different level is also added, for representing the TCM that performs the AIS insertion.

Bits 1-4 of the FTFL represent a monitoring level, and the values are respectively the end-to-end path monitoring and the TCM monitoring from 1 to 6 levels. Bits 5-8 represent a fault type, that is, the reason of the AIS insertion is given. Each monitoring level represented by bits 1-4 corresponds to all the eight fault type indications represented by bits 5-8, in which 0001 "signal failure" is mainly provided for forward compatibility, and the fault types represented by 0011 to 0111 are more specific, which do not coexist with 0001. In this manner, the operator can locate the problem rapidly, and takes the located problems as the reference after the influences among TCMs of different operators occur.

After the fault indication code of the FTFL is extended, the subsequent process for executing the TCM monitoring includes the following steps. After detecting the defect, the tributary units or the line units in the network node device write the defect type and the TCM level in the fault indication code.

After the AIS is inserted at the intermediate node, under the assistance of the FTFL, the TCM level and the reason of the AIS insertion can be found out.

In Step 504, a non-intrusive monitoring in the scope is configured. According to the user's demands, the node requiring the non-intrusive monitoring is selected in the scope with the configured TCM application. The non-intrusive monitoring refers to the monitoring performed without destroying the signal itself, in which the corresponding process is performed only by utilizing the monitoring result, for example, for performing the protection switching. For example, the monitoring performed at the node H as shown in FIG. 3 is a non-intrusive monitoring. The difference between the non-intrusive monitoring and the TCM sink node is that, in the non-intrusive monitoring, even if a defect is detected, the BDI and BEI are not transmitted back, and the AIS is not inserted. In addition, the trail signal failure information is only transferred to the connection function, instead of being transferred to the terminating and adapting functions of other layers.

Definitely, if the user does not require the non-intrusive monitoring, the user may not select such a function, but directly executes the next step. As for the bi-directional service, each direction is respectively configured, and the two directions may be different from each other.

In Step 505, the configuration of the TCM is confirmed. After the user confirms the above configuration of the TCM, the system further checks whether the configuration of the user conflicts with the other configured TCMs or not, for example, the user sets the TCM level to TCM1 in a certain domain, but in the service, the TCM1 has already been set as a TCM level in another domain, so that the conflict occurs. The system further checks whether the configuration of the non-intrusive monitoring matches with the corresponding level or not, that is, whether the non-intrusive monitoring can be performed on the TCM system of the level. If the check is successfully passed, Step 506 is executed; otherwise, Step 502 is re-executed.

In Step 506, a management of the TCM is configured. For a source node applying the TCM, the user is promoted to configure the attribute of a transmitter, for example, the TTI configuration to be transmitted, including a country code, operator code, and access point code of the source node. For a sink node applying the TCM, the user is prompted to configure the attribute of a receiver, for example, the TTI configuration to be received, including configuring an expected value of a receiving trail and a BIP8 error rate threshold value. In addition, the source node of the TCM also prompts the user whether it is allowed to manually insert the LCK, so as to lock the signal. In the case that it has configured to allow manually inserting the LCK, the network node device receives a lock signal defect inserted by the user at the source node of the TCM.

As for the application manners in Step 503 that it is configured to perform the AIS insertion on the subsequent service trail, transfer the signal failure information of the TCM among different layers, or adopt the signal failure information and the signal degradation information of the TCM as the conditions for the protection switching, the user is prompted to additionally configure to enable the subsequence action of the TIM and to enable the subsequent action of the LTC. If it is configured to enable the subsequent action of the LTC, the LTC defect serves as a condition for the AIS insertion, and the LTC also serves as the condition for the protection switching, and joins in restraining the alarm. If it is configured to disable the subsequent action of the LTC, the LTC defect does not serve as the condition for the AIS insertion, and the LTC defect does not serve as the condition for the protection switching. If it is configured to enable the subsequent action of the TIM, the TIM defect may serve as the condition for the AIS insertion, and the TIM may also serve as the condition for the protection switching, and join in restraining the alarm. If it is configured to disable the subsequent action of the TIM, the TIM defect does not serve as the condition for the AIS insertion, and the TIM defect does not serve as condition for the protection switching. Here, the alarm for being restrained refers to relatively important alarms. When the alarm occurs together with another alarm with a lower importance level, it is possible to only report the alarm, and when another alarm with a higher importance level exists, the current alarm is also restrained. If the LTC or the TIM is set in restraining the alarm, when the LTC or the TIM occurs with other alarms with the lower importance level, it is possible to only report the LTC or the TIM.

The node with the non-intrusive monitoring in the scope prompts the user to configure the attribute of the receiver of the node, for example, TTI configuration to be received and the configuration of the BIP8 error rate threshold value, and further prompts the user to configure whether to enable the TIM to serve as the condition for the protection switching and whether to enable the LTC to serve as the condition for the protection switching.

For the bi-directional service, each direction may be respectively configured as described above, and the two directions may be different from each other.

After the management of the TCM has been configured, the subsequent TCM monitoring process includes the following steps.

If the attributes of the transmitter and the receiver are configured, the tributary units or the line units in the network node device of the transmitter insert the corresponding overhead at a corresponding source node, the tributary units or the line units in the network node device of the receiver extract and monitor the overhead, and detect whether the defect exists or not. If it is configured to enable the subsequent action of the TIM, after detecting the TIM defect, the tributary units or the line units in the network node device insert the maintenance signal AIS. If it is configured to enable the subsequent action of the LTC, after detecting the LTC defect, the tributary units or the line units in the network node device insert the maintenance signal AIS.

In Step 507, it is determined whether another scope in the service requiring the signal monitoring by adopting the TCM exists or not, and if yes, Step 502 is executed, in which another TCM level is configured; otherwise, Step 508 is executed.

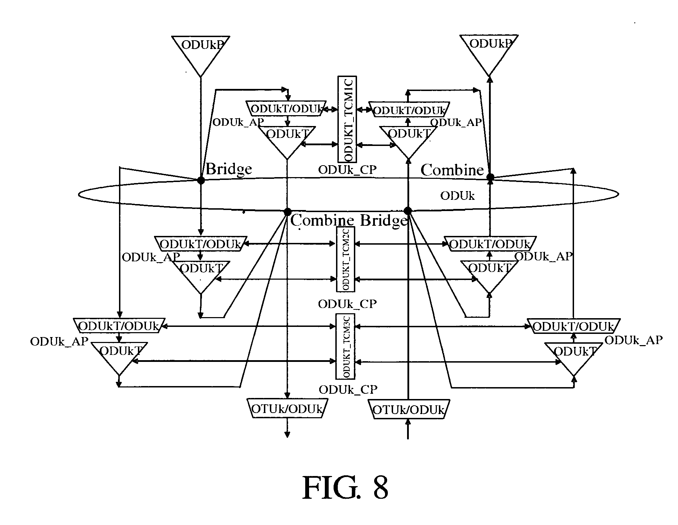

In Step 508, if it is configured to transfer the signal failure information of the TCM among different layers in Step 503, Step 509 is executed; otherwise, Step 512 is executed. When it is configured not to transfer the signal failure information of the TCM among different layers, the corresponding atomic function model view is, for example, as shown in FIG 8. By adding branches, the TCM source end and the TCM sink end independently process each TCM sub-layer. The server layer/client layer association does not exist between sub-layers. After each TCM sub-layer has been processed, the subsequent actions are combined through an OR manner and output to the client layer.

In Step 509, the relations among the configured TCM function of each level are displayed to the user in the graphical interface manner, which are provided for being configured by the user.

Firstly, the affecting relation among the TCMs of different levels is configured, that is, the relation between the client layer and the server layer, the server layer affects the client layer. The system provides a management interface for the user to configure the affecting relation. For example, the TCM1 is configured as the server layer, and the TCM2 is configured as the client layer, and if the TCM1 monitors the defect and needs to insert the AIS, the TCM1 inserts the AIS in the TCM2. Alternatively, the TCM1 is configured as the client layer, and the TCM2 is configured as the server layer, and if the TCM1 monitors the defect and needs to insert the AIS, the inserted AIS does not affect the TCM2. A multi-layer client-server relation may be set, for example, the TCM1 is set as the server layer of the TCM2, and the TCM2 is also set as the server layer of the TCM3. For the TCM without being configured with the affecting relation, the AIS is not transferred among the TCM layers.

In the prior art, the affecting relation among the TCMs is not configured, so that the effect among the sink end TCMs is uncertain. For example, in the network as shown in FIG. 3, it is assumed that another domain 3 exists in the drawing, the included nodes are GHKL, the trail of a service in the domain 3 is GHL, and the defined TCM level is TCM3. If the TCM2 detects the LCK at the node L, since no affecting relation is configured, the TCM2 of the L node may insert the AIS in the TCM3 in the system, and in this manner, it is considered that the defect occurs in the domain 3, which may result in the protection switching. But actually the domain 3 does not have any problem, and the switching is incorrect. On the contrary, according to the solution of the present invention, it is set that the TCM3 affects the TCM2, that is, the TCM3 serves as the server layer and the TCM2 serves as the client layer, and thus the problem can be avoided.

In addition, the configuration of the relations among the TCM function of each level further includes configuring the location of the TCM of each level, that is, the TCM is located before or after the ODU cross-connect unit, the user may set the location of the TCM of each level through the management interface. In the prior art, the location of the TCM with respect to the cross-connect unit is not limited, so that the monitoring scope of the TCM of each level is rather unclear. For example, during the process of realizing the protection switching, since the protection switching is realized in the cross-connect unit, if the TCM is set after the cross-connect unit, since the switching is finished, the monitoring motion becomes meaningless. As for another scenario, if it intends to monitor the quality of the node device during the TCM monitoring, but the TCM is set before the cross-connect unit, the situation of the cross-connect unit cannot be monitored. In the present invention, the above problem is solved by means of configuring the management interface.

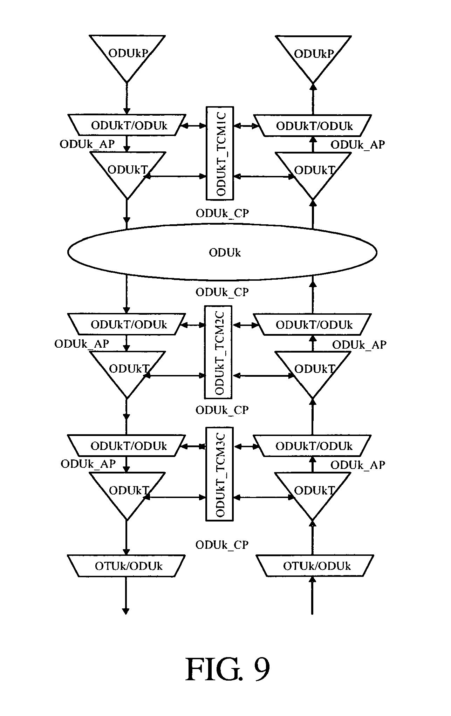

The system may provide the finished TCM configuration to the user by adopting the graphical interface manner, and the graphical interface may be an atomic function model view, as shown in FIG. 9. In FIG. 9, the function finished by each member of the apparatus shown in FIG. 4 is shown. FIG 9 is automatically generated according to the configuration performed by the user in Steps 502 to 507, in which the relations among the TCM functions are also automatically generated by the system, so that the relations may not meet the user's demands. Here, as shown in FIG 9, the user can adjust the relations among the TCM functions via the management interface provided by the system.

In FIG 9, the left side shows source direction functions, and the right side shows sink direction functions. According to the method for describing the atomic function suggested in the ITU-T G.805, from top to bottom on the left side, the ODUkP in the topmost triangle represents the ODU path trail terminal, which is adapted to insert the ODUkP overhead to the signal. The ODUkT/ODUk in the trapezoid under the triangle adapts the ODUkP signal to the ODUkT sub-layer signal, that is, converts a frame format of the ODUkP signal to the frame format of the ODUkT sub-layer signal. The ODUkT in the triangle under the trapezoid represents the ODU tandem connection sub-layer trail terminal, which is adapted to insert the ODUkT sub-layer overhead in the signal. The ODUk in the ellipse under the triangle represents the cross function, that is, the function realized by the ODU cross-connect unit, which is adapted to realize the routing and the dual transmission/selective receiving functions. The two groups of trapezoids and the triangles under the ellipse have the same functions as the ODUkT/ODUk and the ODUkT, except that the TCM1 adaptation and overhead insertion are realized in the above ODUkT/ODUk and ODUkT, whereas the two groups of the trapezoids and the triangles respectively realize the TCM2 and TCM3 adaptation and overhead insertion. The ODUk_AP between the trapezoid and the triangle represents an access point, that is, an interface there-between. The OTUk/ODUk in the trapezoid under the trapezoids and the triangles adapts the ODU layer signal to the OTU layer signal. The part above the ellipse achieves the functions of the tributary unit, and the part under the ellipse achieves the functions of the line unit. The ODUk_CP represents a connection point, which represents that a connect relation exists here.

As known from FIG. 9 that, through the configuration from Steps 502 to 507, totally the TCMs of three levels are set, in which the TCM1 is located before the cross connection, and serves as the client layer of the TCM2, the TCM2 and the TCM3 are located after the cross connection, the TCM2 serves as the client layer of the TCM3. Practically, the user may set the TCMs of at most 6 levels, and the TCMs of the 6 levels may be all located before or after the cross connection.

The ODUkT_TCMnC in the rectangle of FIG 9 is the management interface provided to the user, in which n represents a corresponding level and C represents the control. Through the interface, the user may change the TCM levels and modes and set the relevant expected value according to the actual demands.

In Step 510, it is determined whether the user confirms the configuration of the relations among the TCM function of each level or not, in which if yes, Step 512 is executed; otherwise, Step 511 is executed.

In Step 511, the user adjusts the relations among the TCM function of each level, including adjusting the affecting relation and the location relation among the TCMs of different levels.

In Step 512, the TCM of each level is enabled. The configuring process for enabling or disabling the TCM of each level includes configuring to enable or disable the TCM source function and configure to enable or disable the TCM sink function.

When it is configured to enable the TCM source function, the TCM specifically includes performing the functions of the ODU TCM trail terminal source and the adaptation source from the ODU TCM to the ODU. When it is configured to enable the TCM sink function, the functions of the ODU TCM trail terminal sink and the adaptation sink from the ODU TCM to the ODU are executed.

The TCM applied by each scope may be selected to be enabled or disabled. If the TCM is configured to be enabled, the insertion at the TCM source end and/or the monitoring motion at the TCM sink end are started, and according to the configured usage manner, the maintenance signal is inserted. If the TCM relevant protection switching is configured, some defects acquired according to the TCM are taken as the conditions for the protection switching, so as to perform the protection switching.

In the prior art, the user cannot configure to enable the TCM, and each time when the user configures the TCM of each level, the TCM is automatically enabled, so that different TCM configuring sequences may generate different processing results. For example, as for FIG 2, if the TCM2 is firstly configured, the system automatically enables the TCM2, and the TCM2 starts to monitor. If the LCK defect occurs at the node C, the node E may detect the defect. If the TCM1 is firstly configured, the system automatically enables the TCM1, and the TCM1 starts to monitor. If the LCK defect occurs at the node B, the TCM1 inserts the AIS at the node D, and the AIS is transparently transmitted to the TCM2. As a result, after the TCM2 is enabled, even if the LCK defect occurs at the node C, it is not detected, that is because only the AIS is detected. In this manner, different configuration sequences result in different processing results. In the present invention, such problem is solved by selecting the enabling manner.

In Step 513, the process is ended.

Second Embodiment

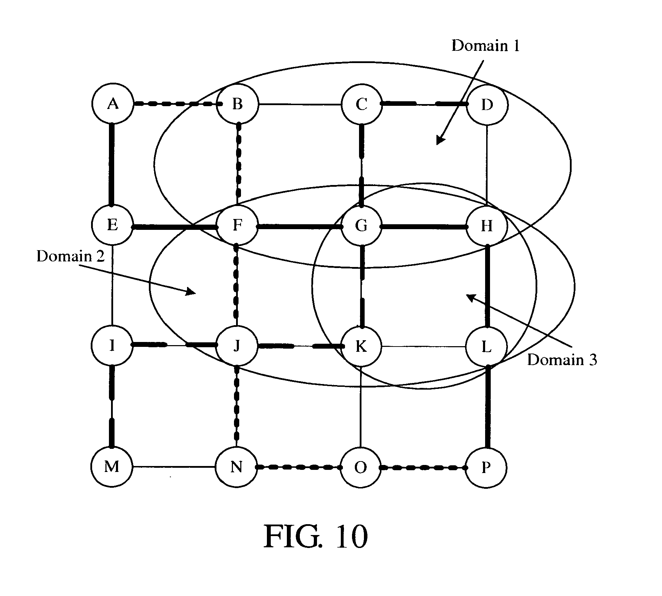

In this embodiment, the network shown in FIG 10 is taken as an example for illustrating the method for monitoring network quality through the TCM.

In FIG 10, there are totally 16 nodes from A to P. The part circled by the ellipse represents that this part is a certain domain, and such domain usually refers to a certain operator, or any part of the network scope divided by the users in which the signal quality is separately monitored. Three domains are included in this embodiment, that is, a domain 1 including the nodes BCDFGH, a domain 2 including nodes FGHJKL, and a domain 3 including nodes GHKL. A service A starts from the node A, passes through the nodes E, F, G, H, and L, and finally reaches the node P, as shown by bold solid lines in the drawing. A service B is a bi-directional service, in which as for one direction, it starts from the node A, passes through the nodes B, F, J, N, and O, and finally reaches the node P, and as for the other direction, it starts from the node P, passes through the nodes O, N, J, F, and B, and finally reaches the node A, as shown by short dashed lines in the drawing. A service C starts from the node D, passes through the nodes C, G, K, J, and I, and finally reaches the node M, as shown by long dashed lines in the drawing.

For the service A, the configuring process of the TCM is described as follows.

In Step 0, the service A is selected.

In Step 1, the configurations of service A in the domain 1 are completed, which includes the following steps.

In Step 11, an application scope of the TCM is configured, and relations between the source and sink nodes and the ODU cross-connect unit are configured, that is, the TCM of each level is located before or after the cross connection. Since it intends to monitor the signal quality situation when the signal passes through the domain 1, and an scope which the service A passes through in the domain 1 is FGH, the TCM1 is configured to be applied to the scope FGH. After the TCM1 source of the node F is configured to be located after the cross connection, the TCM1 sink of the node H is located before the cross connection.

In Step 12, a usage manner of the TCM is configured. It is configured to enable the AIS insertion on the subsequent service trail, to transfer the signal failure information of the TCM among different layers, and to adopt the signal failure information and the signal degradation information of the TCM as the condition for the protection switching.

In Step 13, it is configured that the non-intrusive monitoring is not required in the scope.

In Step 14, the user confirms the above configuration, and the system check is successfully passed.

In Step 15, the TCM relevant configuration is performed. As for the source node F applying the TCM1, the user is prompted to configure an attribute of a transmitter, for example, the TTI configuration to be transmitted. As for the sink node H applying the TCM1, the user is prompted to configure an attribute of a receiver, for example, the TTI configuration to be received and the BIP8 error rate threshold value configuration etc. Furthermore, it further needs to prompt the user to additionally configure to enable the subsequent action of the TIM and to enable the subsequent action of the LTC. In this embodiment, the non-intrusive monitoring is not configured to be performed on the nodes in the scope, so that the non-intrusive monitoring relevant configurations are not required. Further, it still needs to prompt the user to configure whether it is allowed to manually insert the LCK or not.

In Step 16, it is determined whether another scope requiring the signal monitoring by adopting the TCM exists or not, and if yes, Step 2 is executed.

In Step 2, the configurations of the service A in the domain 2 are completed, which includes the following steps.

In Step 201, an application scope of the TCM is configured, in which the relation between the source and sink nodes and the ODU cross-connect unit is configured, that is, the TCM of each level is located before or after the cross connection. Since it intends to monitor the signal quality situation when the signal passes through the domain 2, and the scope which the service A passes through in the domain 2 is FGHL, the TCM1 is configured to be applied to the scope of FGHL. After the TCM1 source of the node F is configured to be located after the cross connection, the TCM1 sink of the node L is located before the cross connection.

In Step 202, a usage manner of the TCM is configured. It is configured to enable the AIS insertion on the subsequent service trail, to transfer the signal failure information of the TCM among different layers, and to adopt the signal failure information and the signal degradation information of the TCM as the conditions for the protection switching.

In Step 203, the configuration of the non-intrusive monitoring in the scope is performed. It is configured that the non-intrusive monitoring is not required in the scope.

In Step 204, the user confirms the above configuration, and the system performs the check, but it fails to pass the check. That is because the TCM1 has already been applied to the scope FGH, and it cannot be applied to the scope FGHL overlapping with the FGH. The user is prompted that the TCM1 has been used, and the TCM1 cannot be applied to the FGHL scope. Step 211 is executed.

In Step 211, an application scope of the TCM is configured, in which the relations between the source and sink nodes and the ODU cross-connect unit are configured, that is, the TCM of each level is located before or after the cross connection. Since it intends to monitor the signal quality situation when the signal passes through the domain 2, and the scope which the service A passes through in the domain 2 is FGHL, the TCM2 is configured to be applied to the scope of FGHL. After the TCM2 source of the node F is set to locate after the cross connection, the TCM2 sink of the node L is located before the cross connection.

In Step 212, a usage manner of the TCM is configured. It is configured to enable the AIS insertion on the subsequent service trail, to transfer the signal failure information of the TCM among different layers, and to adopt the signal failure information and the signal degradation information of the TCM as the conditions for the protection switching.

In Step 213, the configuration of the non-intrusive monitoring in the scope is performed. It is configured that the non-intrusive monitoring is performed on the TCM2 by the node G in the scope.

In Step 214, the user confirms the above configuration, and the system performs the check. The check is passed successfully, and Step 215 is executed.

In Step 215, the TCM relevant configuration is performed. As for the source node F applying the TCM2, the user is prompted to configure the attribute of the transmitter, for example, the TTI configuration to be transmitted. As for the sink node L applying the TCM2, the user is prompted to configure the attribute of the receiver, for example, the TTI configuration to be received and the BIP8 error rate threshold value configuration etc. Furthermore, it needs to prompt the user to additionally configure to enable the subsequent action of the TIM and to enable the subsequent action of the LTC. Furthermore, it still needs to prompt the user to configure whether it is allowed to manually insert the LCK.

As for the node G performing the non-intrusive monitoring on the TCM2, the user is prompted to configure the attribute of the receiver, for example, the TTI configuration to be received and the BIP8 error rate threshold value configuration etc. Furthermore, it needs to prompt the user to configure whether to adopt the TIM as the condition for the protection switching or not, and configure whether to adopt the LTC as the condition for the protection switching or not.

In Step 216, it is determined whether another scope requiring the signal monitoring by adopting the TCM exists or not, and if yes, Step 3 is executed.

In Step 3, the configurations of service A in the domain 3 are completed, which includes the following steps.

In Step 31, an application scope of the TCM is configured, in which the relation between the source and sink nodes and the ODU cross-connect unit are configured, that is, the TCM of each level is located before or after the cross connection. Since it intends to monitor the signal quality situation when the signal passes through the domain 3, and the scope which the A service passes through in the domain 3 is GHL, the TCM3 is configured to be applied to the scope of GHL. After the TCM3 source of the node G is configured to be located after the cross connection, the TCM3 sink of the node L is located before the cross connection.

In Step 32, a usage manner of the TCM is configured. It is configured to enable the AIS insertion on the subsequent service trail, to transfer the signal failure information of the TCM among different layers, and to adopt the signal failure information and the signal degradation information of the TCM as the conditions for the protection switching.

In Step 33, the configuration of the non-intrusive monitoring in the scope is performed. It is configured that the non-intrusive monitoring is not required in the scope.

In Step 34, the user confirms the above configuration, and the system performs the check. The check is passed successfully.

In Step 35, the TCM relevant configuration is performed. As for the source node G applying the TCM3, the user is prompted to configure the attribute of the transmitter, for example, the TTI configuration to be transmitted. As for the sink node L applying the TCM3, the user is prompted to configure the attribute of the receiver, for example, the TTI configuration to be received and the BIP8 error rate threshold value configuration etc. Furthermore, it needs to prompt the user to additionally configure to enable the subsequent action of the TIM and to enable the subsequent action of the LTC. In this embodiment, it is not configured to perform the non-intrusive monitoring on the nodes in the scope, so that the non-intrusive monitoring relevant configuration is not required. Furthermore, it still needs to prompt the user to configure whether it is allowed to manually insert the LCK.

In Step 36, it is determined whether another scope requiring the signal monitoring by adopting the TCM exists or not, and if not, Step 4 is executed.

In Step 4, it is configure to transfer the signal failure information of the TCM among different layers in Step 2, so Step 5 is executed.

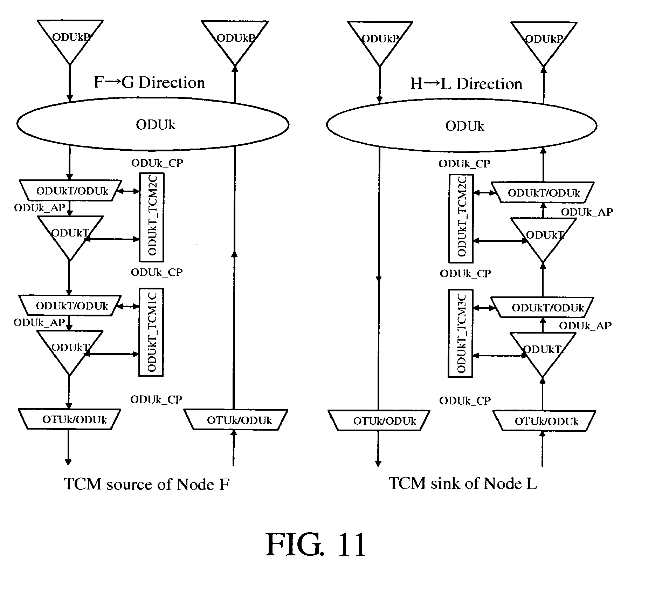

In Step 5, the relations among the configured TCM function of each level are indicated by the atomic function model view, as shown in FIG 11. It may be known from FIG 11 that, the node F starts to use the TCMs of two levels, and the processing sequence thereof is that, the cross function is realized in the ODU1, then the TCM1 is processed, and then the TCM2 is processed. The node L starts to use the TCMs of two levels, and the processing sequence thereof is that, the TCM3 is first processed, then the TCM2 is processed, and then the cross function is realized in the ODU1.

In Step 6, the user confirms the configuration.

In Step 7, the TCM is enabled. The TCM1 applied to the scope FGH is enabled, the TCM2 applied to the scope FGHL is enabled, and the TCM3 applied to the scope GHL is enabled.

In Step 8, the process is ended.

For the service B, the process for configuring the TCM is described as follows.

In Step 0, the service B is selected.

In Step 1, the service B is configured in the first domain, which includes the following steps.

In Step 11, an application scope of the TCM is configured, in which the relation between the source and sink nodes and the ODU cross-connect unit is configured, that is, the TCM of each level is located before or after the cross connection. Since it intends to monitor the signal quality situation when the signal passes through the domain 1, and the scope which the service B passes through in domain 1 is BF, the TCM1 is configured to be applied to the scope of BF. The service B is a bi-directional service, and accordingly, the scope configuration is applied bidirectionally. That is, as for the direction from A to P, the TCM1 is applied to the scope BF, and as for the direction from P to A, the TCM1 is applied to the scope FB. After the TCM1 source and sink of the node B are set to be located after the cross connection, the TCM1 source and sink of the node F is located before the cross connection.

In Step 12, a usage manner of the TCM is configured. As for both the direction from A to P and the direction from P to A, it is configured to enable the AIS insertion on the subsequent service trail, to transfer the signal failure information of the TCM among different layers, and to adopt the signal failure information and the signal degradation information of the TCM as the conditions for the protection switching.

In Step 13, the configuration of the non-intrusive monitoring in the scope is performed. It is configured that the non-intrusive monitoring is not required in the scope.

In Step 14, the user confirms the above configuration, and the system performs the check. The check is passed successfully.

In Step 15, the TCM relevant configuration is performed. In the direction from A to P, as for the source node B applying the TCM1, the user is prompted to configure the attribute of the transmitter, for example, the TTI configuration to be transmitted. As for the sink node F applying the TCM1, the user is prompted to configure the attribute of the receiver, for example, the TTI configuration to be received and the BIP8 error rate threshold value configuration etc. Further, it is necessary to prompt the user to additionally configure to enable the subsequent action of the TIM and to enable the subsequent action of the LTC. In this embodiment, it is not configured to perform the non-intrusive monitoring on the nodes in the scope, so that the non-intrusive monitoring relevant configuration is not required. Further, it needs to prompt the user to configure whether it is allowed to manually insert the LCK.

In the direction from P to A, as for the source node F applying the TCM1, the user is prompted to configure the attribute of the transmitter, for example, the TTI configuration to be transmitted. As for the sink node B applying the TCM1, the user is prompted to configure the attribute of the receiver, for example, the TTI configuration to be received and the BIP8 error rate threshold value configuration etc. Further, it needs to prompt the user to additionally configure to enable the subsequent action of the TIM and to enable the subsequent action of the LTC. In this embodiment, it is not configured to perform the non-intrusive monitoring on the nodes in the scope, so that the non-intrusive monitoring relevant configuration is no required.

In Step 16, it is determined whether another scope requiring the signal monitoring by adopting the TCM exists or not, and if yes, Step 2 is executed.

In Step 2, the configurations of the service B in the domain 2 are completed, which includes the following steps.

In Step 21, an application scope of the TCM is configured, in which the relation between the source and sink nodes and the ODU cross-connect unit is configured, that is, the TCM of each level is located before or after the cross connection. Since it intends to monitor the signal quality situation when the signal passes through the domain 2, and the scope which the service B passes through in the domain 2 is FJ, the TCM2 is configured to be applied to the scope of FJ. The service B is a bi-directional service, and accordingly, the scope configuration is applied bidirectionally. That is, as for the direction from A to P, the TCM2 is applied to the scope of FJ, and as for the direction from P to A, the TCM1 is applied to the scope of JF After the TCM1 source and sink of the node F are set to be located after the cross connection, the TCM1 source and sink of the node J is located before the cross connection.

In Step 22, a usage manner of the TCM is configured. As for both the direction from A to P and the direction from P to A, it is configured to enable the AIS insertion on the subsequent service trail, to transfer the signal failure information of the TCM among different layers, and to adopt the signal failure information and the signal degradation information of the TCM as the conditions for the protection switching.

In Step 23, the configuration of the non-intrusive monitoring in the scope is performed. It is configured that the non-intrusive monitoring is not required in the scope.

In Step 24, the user confirms the above configuration, and the system performs the check. The check is passed successfully, and Step 25 is executed.

In Step 25, the TCM relevant configuration is performed. In the direction from A to P, as for the source node F applying the TCM2, the user is prompted to configure the attribute of the transmitter, for example, the TTI configuration to be transmitted. As for the sink node J applying the TCM2, the user is prompted to configure the attribute of the receiver, for example, the TTI configuration to be received and the BIP8 error rate threshold value configuration etc. Furthermore, it needs to prompt the user to additionally configure to enable the subsequent action of the TIM and to enable the subsequent action of the LTC. In this embodiment, it is not configured to perform the non-intrusive monitoring on the nodes in the scope, so that the non-intrusive monitoring relevant configuration is not required. Furthermore, it still needs to prompt the user to configure whether it is allowed to manually insert the LCK.

In the direction from P to A, as for the source node J applying the TCM2, the user is prompted to configure the attribute of the transmitter, for example, the TTI configuration to be transmitted. As for the sink node F applying the TCM2, the user is prompted to configure the attribute of the receiver, for example, the TTI configuration to be received and the BIP8 error rate threshold value configuration etc. Furthermore, it needs to prompt the user to additionally configure to enable the subsequent action of the TIM and to enable the subsequent action of the LTC. In this embodiment, it is not configured to perform the non-intrusive monitoring on the nodes in the scope, so that the non-intrusive monitoring relevant configuration is not required. Furthermore, it needs to prompt the user to configure whether it is allowed to manually insert the LCK.

In Step 26, it is determined whether another scope requiring the signal monitoring by adopting the TCM exists or not, if no, Step 3 is executed.

In Step 3, it is configured to transfer the signal failure information of the TCM among different layers, so Step 4 is executed.

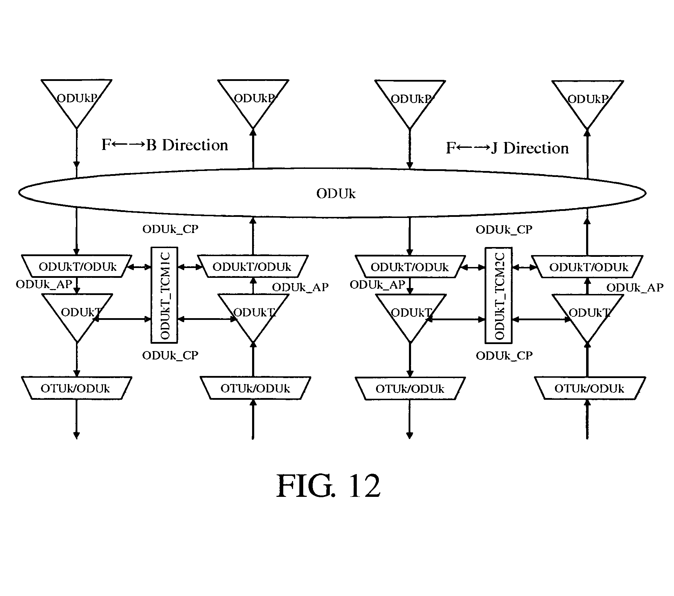

In Step 4, the relations among the configured TCM function of each level are indicated by the atomic function model view, including the execution sequence and the location relation of the TCM functions of multiple levels, as shown in FIG. 12.

In Step 5, the user confirms the configuration.

In Step 6, the TCM is enabled. In the direction from A to P, the TCM1 applied to the scope BF is enabled, and the TCM2 applied to the scope FJ is enabled. In the direction from P to A, the TCM1 applied to the scope FB is enabled, and the TCM2 applied to the scope JF is enabled.

In Step 7, the process is ended.

For the service C, the process for configuring the TCM is described as follows.

In Step 0, the service C is selected.

In Step 1, the configurations of the service C in the domain 1 are completed, which includes the following steps.

In Step 11, an application scope of the TCM is configured, in which the relations between the source and sink nodes and the ODU cross-connect unit are configured, that is, the TCM of each level is located before or after the cross connection. Since it intends to monitor the signal quality situation when the signal passes through the domain 1, and the scope which the service C passes through in the domain 1 is DCG, the TCM1 is configured to be applied to the scope of DCG After the TCM1 source of the node D is set to be located after the cross connection, the TCM1 sink of the node G is located before the cross connection.

In Step 12, a usage manner of the TCM is configured. It is configured to enable the AIS insertion on the subsequent service trail, to transfer the signal failure information of the TCM among different layers, and to adopt the signal failure information and the signal degradation information of the TCM as the conditions for the protection switching.

In Step 13, the configuration of the non-intrusive monitoring in the scope is performed. It is configured that the non-intrusive monitoring is performed on the TCM1 by the node C in the scope.

In Step 14, the user confirms the above configuration, and the system performs the check. The check is passed successfully.

In Step 15, the TCM relevant configuration is performed. As for the source node D applying the TCM1, the user is prompted to configure the attribute of the transmitter, for example, the TTI configuration to be transmitted. As for the sink node G applying the TCM1, the user is prompted to configure the attribute of the receiver, for example, the TTI configuration to be received and the BIP8 error rate threshold value configuration etc. Furthermore, it needs to prompt the user to additionally configure to enable the subsequent action of the TIM and to enable the subsequent action of the LTC. Furthermore, it still needs to prompt the user to configure whether it is allowed to manually insert the LCK.

As for the node C for performing the non-intrusive monitoring on the TCM1, the user is prompted to configure whether to adopt the TIM defect on the node C as the condition for the protection switching or not, and configure whether to adopt the LTC defect on the node C as the condition for the protection switching or not.

In Step 16, it is determined whether another scope requiring the signal monitoring by adopting the TCM exists or not, and if yes, Step 2 is executed.

In Step 2, the configurations of the service C in the domain 2 are completed, which includes the following steps.

In Step 21, an application scope of the TCM is configured, in which the relations between the source and sink nodes and the ODU cross-connect unit are configured, that is, the TCM of each level is located before or after the cross connection. Since it intends to monitor the signal quality situation when the signal passes through the domain 2, and the scope which the service C passes through in the domain 2 is GKJ, so the TCM2 is configured to be applied to the scope of GKJ. After the TCM2 source of the node G is set to be located after the cross connection, the TCM2 sink of the node J is located before the cross connection.

In Step 22, a usage manner of the TCM is configured. It is configured to enable the AIS insertion on the subsequent service trail, to transfer the signal failure information of the TCM among different layers, to adopt the signal failure information and the signal degradation information of the TCM as conditions for the protection switching.

In Step 23, the configuration of the non-intrusive monitoring in the scope is performed. It is configured that the non-intrusive monitoring is not required in the scope.

In Step 24, the user confirms the above configuration, and the system performs the check. The check is passed successfully, and Step 25 is executed.

In Step 25, the TCM relevant configuration is performed. As for the source node G applying the TCM2, the user is prompted to configure the attribute of the transmitter, for example, the TTI configuration to be transmitted. As for the sink node J applying the TCM2, the user is prompted to configure the attribute of the receiver, for example, the TTI configuration to be received and the BIP8 error rate threshold value configuration etc. Furthermore, it needs to prompt the user to additionally configure to enable the subsequent action of the TIM and to enable the subsequent action of the LTC. In this embodiment, it is not configured to perform the non-intrusive monitoring on the nodes in the scope, so that the non-intrusive monitoring relevant configuration is not required. Furthermore, it still needs to prompt the user to configure whether it is allowed to manually insert the LCK.

In Step 26, it is determined whether another scope requiring the signal monitoring by adopting the TCM exists or not, and if yes, Step 3 is executed.

In Step 3, the configurations of the service C in the domain 3 are completed, which includes the following steps.

In Step 31, an application scope of the TCM is configured, in which the relations between the source and sink nodes and the ODU cross-connect unit are configured, that is, the TCM of each level is located before or after the cross connection. Since it intends to monitor the signal quality situation when the signal passes through the domain 3, and the scope which the service C passes through in the domain 3 is GK, so the TCM3 is configured to be applied to the scope of GK. After the TCM3 source of the node G is set to locate after the cross connection, the TCM3 sink of the node K is located before the cross connection.

In Step 32, a usage manner of the TCM is configured. It is configured to enable the AIS insertion on the subsequent service trail, to transfer the signal failure information of the TCM among different layers, and to adopt the signal failure information and the signal degradation information of the TCM as the conditions for the protection switching.

In Step 33, the configuration of the non-intrusive monitoring in the scope is performed. It is configured that the non-intrusive monitoring is not required in the scope.

In Step 34, the user confirms the above configuration, and the check is passed successfully, and Step 35 is executed.

In Step 35, the TCM relevant configuration is performed. As for the source node G applying the TCM3, the user is prompted to configure the attribute of the transmitter, for example, the TTI configuration to be transmitted, and whether to allow manually inserting the LCK. As for the sink node K applying the TCM3, the user is prompted to configure the attribute of the receiver, for example, the TTI configuration to be received and the BIP8 error rate threshold value configuration etc. Furthermore, it needs to prompt the user to additionally configure to enable the subsequent action of the TIM and to enable the subsequent action of the LTC. In this embodiment, it is not configured to perform the non-intrusive monitoring on the nodes in the scope, so that the non-intrusive monitoring relevant configuration is not required.

In Step 36, it is determined whether another scope requiring the signal monitoring by adopting the TCM exists or not, and if not, Step 4 is executed.

In Step 4, it is configured to transfer the signal failure information of the TCM among different layers in Step 2, so Step 5 is executed.

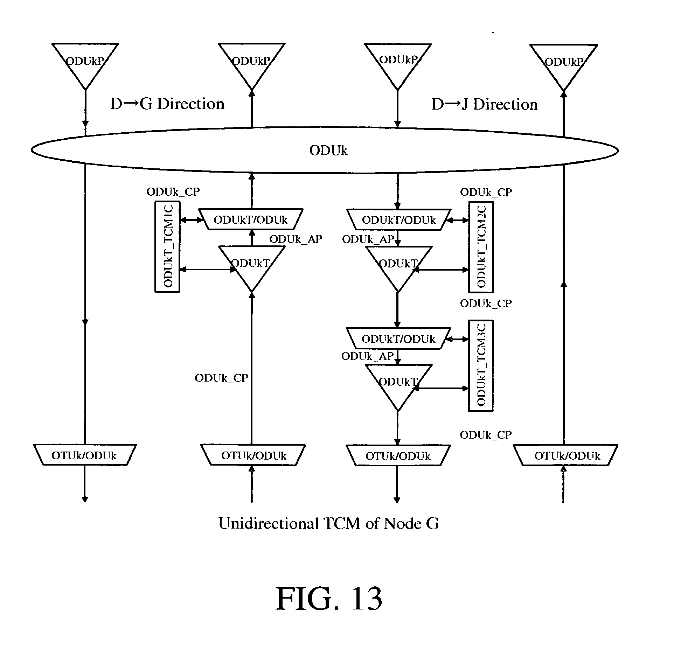

In Step 5, the relations among the configured TCM function of each level are indicated by the atomic function model view, including the execution sequence and the location relation of the TCM functions of multiple levels, as shown in FIG 13.

In Step 6, the user confirms the configuration.

In Step 7, the TCM is enabled. The TCM1 applied to the scope of BF is enabled, and the TCM2 applied to the scope of FJ is enabled.

In Step 8, the process is ended.

To sum up, the above descriptions are merely preferred embodiments of the present invention, but not intended to limit the protection scope of the present invention, which is defined by the appended claims.

## Claims

1. A method for monitoring network quality, comprising:
configuring a tandem connection monitoring (TCM) at a network node device, wherein the configuring the TCM comprises: configuring an application scope of the TCM of each level, and configuring relations among a plurality of TCM functions and relations between the plurality of TCM functions and a cross connection function;
configuring to enable or disable a subsequent action of a loss of tandem connection (LTC), and/or configuring to enable or disable the TCM of each level; and
performing, by the network node device, the TCM according to the configuration, wherein the performing the TCM comprises: monitoring defects of the TCM of each level according to the relations among the plurality of TCM functions and relations between the plurality of TCM functions and the cross connection function and based on an execution sequence corresponding to the relations.

2. The method for monitoring network quality according to claim 1, wherein
the configuring the TCM further comprises: configuring a usage manner of the TCM; and the performing the TCM further comprises: performing the TCM according to the configured usage manner; or
the configuring the TCM further comprises: configuring a management of the TCM; and the performing the TCM further comprises: performing the TCM according to the management configuration; or
the configuring the TCM further comprises: configuring a non-intrusive monitoring in a TCM scope; and the performing the TCM further comprises: performing the TCM on the network node device with the set non-intrusive monitoring.

3. The method for monitoring network quality according to claim 1, wherein the configuring the application scope of the TCM of each level, and the configuring the relations among the plurality of TCM functions and relations between the plurality of TCM functions and the cross connection function further comprise: setting source nodes and sink nodes for TCMs of different levels, configuring an execution sequence relation between the TCM functions of different levels and the cross connection function, and configuring an execution sequence relation among the TCM functions of different levels;
the performing the TCM further comprises:
inserting, by the network node device, an overhead at each of the source nodes, and extracting the inserted overhead at each of the sink nodes according to settings of the source nodes and the sink nodes; first executing, by the source end, a TCM of a client layer, then executing a TCM of a server layer, and meanwhile first executing a TCM before a cross connection, and then executing a TCM after the cross connection according to a configured sequence; and first executing, by the sink end, the TCM of the server layer, then executing the TCM of the client layer, and meanwhile first executing the TCM after the cross connection, then executing the TCM before the cross connection.

4. The method for monitoring network quality according to claim 2, wherein the configuring the usage manner of the TCM further comprises: configuring whether to perform a maintenance signal insertion on a subsequent service trail or not; and the performing the TCM further comprises: executing, by the network node device, the maintenance signal insertion when monitoring a defect, after configuring to perform the maintenance signal insertion on the subsequent service trail; or
the configuring the usage manner of the TCM further comprises: configuring whether to transfer signal failure information of the TCM among different layers or not; and the performing the TCM further comprises: transferring, by the network node device, the signal failure information to TCMs of subordinate levels according to the execution sequence when monitoring a defect, after configuring to transfer the signal failure information of the TCM among different layers; or
the configuring the usage manner of the TCM further comprises: configuring whether to adopt signal failure information and signal degradation information as conditions for a protection switching or not; and the performing the TCM further comprises: executing, by the network node device, the protection switching when monitoring a defect, after configuring to adopt the signal failure information as the condition for the protection switching.

5. The method for monitoring network quality according to claim 4, wherein the configuring the usage manner of the TCM further comprises: configuring to enable a subsequent action of a trace identifier mismatch (TIM); and
the performing the TCM further comprises: performing, by the network node device, the maintenance signal insertion after detecting a TIM defect

6. The method for monitoring network quality according to claim 2, wherein the configuring the management of the TCM further comprises: configuring an attribute of a transmitter for a source node applying the TCM on a service, and configuring an attribute of a receiver for a sink node applying the TCM; and the performing the TCM further comprises: inserting, by the network node device, a corresponding overhead at a corresponding source node, extracting and monitoring the overhead at the receiver, and detecting whether a defect occurs or not, after configuring the attributes of the transmitter and the receiver; or
the configuring the management of the TCM further comprises: configuring whether to allow manually inserting a lock signal defect or not; and the performing the TCM further comprises: allowing a user to manually insert a lock signal defect at a source node of the TCM, when configuring to allow manually inserting the lock signal defect.

7. The method for monitoring network quality according to any one of claims 2 to 6, wherein the configuring the TCM further comprises extending a fault indication code of fault type and fault location (FTFL), and the extending the fault indication code of the FTFL further comprises:
adding codes for identifying the TIM defect, an LTC defect, the lock signal defect, an open connection indication (OCI) defect, and an alarm indication signal defect, and codes for identifying different TCM levels in the fault indication code;
the performing the TCM further comprises:
writing, by the network node device, a defect type and a corresponding TCM level in the fault indication code after detecting a defect.

8. The method for monitoring network quality according to any one of claims 2 to 6, wherein after configuring to enable the subsequent action of the LTC, the performing the TCM further comprises: performing the maintenance signal insertion after detecting an LTC defect; after configuring to disable the subsequent action of the LTC, the performing the TCM further comprises: not performing the maintenance signal insertion after detecting an LTC defect.

9. The method for monitoring network quality according to any one of claims 2 to 6, wherein the configuring to enable or disable the TCM of each level further comprises:
configuring to enable or disable a source function of the TCM and configuring to enable or disable a sink function of the TCM;
when configuring to enable the source function of the TCM, the performing the TCM further comprises: executing functions of an optical channel data unit (ODU) TCM trail terminal source and an adaptation source from an ODU TCM to an ODU; when configuring to enable the sink function of the TCM, the performing the TCM further comprises:
executing functions of an ODU TCM trail terminal sink and an adaptation sink from the ODU TCM to the ODU.

10. The method for monitoring network quality according to claim 4, wherein the configuring to transfer the signal failure information of the TCM among different layers further comprises:
prompting, by the network node device, relations among configured TCM function of each level to a user through a graphical interface, wherein if the user agrees, the relations are confirmed; otherwise, the relations among the configured TCM function of each level are adjusted.

11. An apparatus for monitoring network quality, comprising:
a monitoring control module, adapted to configure a tandem connection monitoring (TCM), configure to enable or disable a subsequent action of a loss of tandem connection (LTC), and/or configure to enable or disable the TCM of each level, wherein the configuring the TCM comprises: configuring an application scope of the TCM of each level, and configuring relations among a plurality of TCM functions and relations between the plurality of TCM functions and a cross connection function; and
a monitoring execution module, adapted to perform the TCM according to the configuration, wherein the performing the TCM comprises: monitoring defects of the TCM of each level according to the relations among the plurality of TCM functions and relations between the plurality of TCM functions and the cross connection function and based on an execution sequence corresponding to relations.

12. The apparatus for monitoring network quality according to claim 11, wherein the monitoring control module and the monitoring execution module are disposed in a tributary unit and/or a line unit.

13. The apparatus for monitoring network quality according to claim 12, further comprising an optical channel data unit (ODU) cross-connect unit;
wherein the tributary unit receives a signal transmitted from a client side, adapts and inserts an overhead, and transmits the signal to the ODU cross-connect unit; receives a signal transmitted from the ODU cross-connect unit, deadapts and terminates the overhead, and transmits the signal to the client side;
the ODU cross-connect unit is adapted to dispatch a signal of an ODU layer, and
the line unit adapts and inserts an overhead to a signal, and transmits the signal to the ODU cross-connect unit, receives a signal from the ODU cross-connect unit, and deadapts and terminates the overhead.

14. The apparatus for monitoring network quality according to claim 12, further comprising:
a de-multiplexing unit, adapted to divide a multi-wavelength signal to a plurality of optical channel signals and transmit the plurality of optical channel signals to a plurality of line units; and
a multiplexing unit, adapted to combine the plurality of optical channel signals from the plurality of line units together and transmit the signal to one optical fiber for transmission.

## Patentansprüche

1. Verfahren zum Überwachen der Netzwerkqualität, mit den folgenden Schritten:
Konfigurieren einer Tandemverbindungsüberwachung bzw. TCM in einer Netzwerkknoteneinrichtung, wobei das Konfigurieren der TCM Folgendes umfasst:
Konfigurieren eines Anwendungsbereichs der TCM jeder Ebene und Konfigurieren von Beziehungen zwischen mehreren TCM-Funktionen und Beziehungen zwischen den mehreren TCM-Funktionen und einer Querverbindungsfunktion;
Konfigurieren zum Freigeben oder Sperren einer nachfolgenden Aktion eines Tandemverbindungsverlusts bzw. LTC und/oder Konfigurieren zum Freigeben oder Sperren der TCM jeder Ebene; und
Durchführen der TCM durch die Netzwerkknoteneinrichtung gemäß der Konfiguration, wobei das Durchführen der TCM Folgendes umfasst: Überwachen von Defekten der TCM jeder Ebene gemäß den Beziehungen zwischen den mehreren TCM-Funktionen und Beziehungen zwischen den mehreren TCM-Funktionen und der Querverbindungsfunktion und auf der Basis einer den Beziehungen entsprechenden Ausführungssequenz.

2. Verfahren zum Überwachen der Netzwerkqualität nach Anspruch 1, wobei das Konfigurieren der TCM ferner Folgendes umfasst: Konfigurieren einer Benutzungsweise der TCM; und das Durchführen der TCM ferner Folgendes umfasst: Durchführen der TCM gemäß der konfigurierten Benutzungsweise; oder das Konfigurieren der TCM ferner Folgendes umfasst: Konfigurieren einer Verwaltung der TCM; und das Durchführen der TCM ferner Folgendes umfasst:
Durchführen der TCM gemäß der Verwaltungskonfiguration; oder
das Konfigurieren der TCM ferner Folgendes umfasst: Konfigurieren einer beeinflussungsfreien Überwachung in einem TCM-Bereich; und das Durchführen der TCM ferner Folgendes umfasst: Durchführen der TCM auf der Netzwerkknoteneinrichtung mit der eingestellten beeinflussungsfreien Überwachung.

3. Verfahren zum Überwachen der Netzwerkqualität nach Anspruch 1, wobei das Konfigurieren des Anwendungsbereichs der TCM jeder Ebene und das Konfigurieren der Beziehungen zwischen den mehreren TCM-Funktionen und Beziehungen zwischen den mehreren TCM-Funktionen und der Querverbindungsfunktion ferner Folgendes umfasst: Einstellen von Quellenknoten und Senkenknoten für TCM verschiedener Ebenen, Konfigurieren einer Ausführungssequenzbeziehung zwischen den TCM-Funktionen verschiedener Ebenen und der Querverbindungsfunktion und Konfigurieren einer Ausführungssequenzbeziehung zwischen den TCM-Funktionen verschiedener Ebenen;
wobei das Durchführen der TCM ferner Folgendes umfasst:
Einfügen eines Overhead durch die Netzwerkknoteneinrichtung in jedem der Quellenknoten und Extrahieren des eingefügten Overhead in jedem der Senkenknoten gemäß Einstellungen der Quellenknoten und der Senkenknoten; zuerst Ausführen einer TCM einer Client-Schicht durch das Quellenende, dann Ausführen einer TCM einer Server-Schicht und in der Zwischenzeit zuerst Ausführen einer TCM vor einer Querverbindung und dann Ausführen einer TCM nach der Querverbindung gemäß einer konfigurierten Sequenz; und zuerst Ausführen der TCM der Server-Schicht durch das Senkenende, dann Ausführen der TCM der Client-Schicht und in der Zwischenzeit zuerst Ausführen der TCM nach der Querverbindung und dann Ausführen der TCM vor der Querverbindung.

4. Verfahren zum Überwachen der Netzwerkqualität nach Anspruch 2, wobei das Konfigurieren der Benutzungsweise der TCM ferner Folgendes umfasst:
Konfigurieren, ob eine Wartungssignaleinfügung bei einer nachfolgenden Dienstkontrolle durchzuführen ist oder nicht; und das Durchführen der TCM ferner Folgendes umfasst: Ausführen der Wartungssignaleinfügung durch die Netzwerkknoteneinrichtung, wenn ein Defekt überwacht wird, nach dem Konfigurieren zum Durchführen der Wartungssignaleinfügung bei der nachfolgenden Dienstkontrolle; oder
das Konfigurieren der Benutzungsweise der TCM ferner Folgendes umfasst:
Konfigurieren, ob Signalausfallinformationen der TCM zwischen verschiedenen Schichten zu übermitteln sind oder nicht; und das Durchführen der TCM ferner Folgendes umfasst: Übermitteln der Signalausfallinformationen durch die Netzwerkknoteneinrichtung zu TCM untergeordneter Ebenen gemäß der Ausführungssequenz, wenn ein Defekt überwacht wird, nach dem Konfigurieren zur Übermittlung der Signalausfallinformationen der TCM zwischen verschiedenen Schichten; oder
das Konfigurieren der Benutzungsweise der TCM ferner Folgendes umfasst: Konfigurieren, ob Signalausfallinformationen und
Signalverschlechterungsinformationen als Bedingungen für eine Schutzumschaltung zu verwenden sind oder nicht; und das Durchführen der TCM ferner Folgendes umfasst: Ausführen der Schutzumschaltung durch die Netzwerkknoteneinrichtung, wenn ein Defekt überwacht wird, nach dem Konfigurieren zum Verwenden der Signalausfallinformationen als die Bedingung für die Schutzumschaltung.

5. Verfahren zum Überwachen der Netzwerkqualität nach Anspruch 4, wobei das Konfigurieren der Benutzungsweise der TCM ferner Folgendes umfasst:
Konfigurieren zum Freigeben einer nachfolgenden Aktion einer Trace-Kennungsnichtübereinstimmung bzw. TIM; und
das Durchführen der TCM ferner Folgendes umfasst: Durchführen der Wartungssignaleinfügung durch die Netzwerkknoteneinrichtung nach dem Detektieren eines TIM-Defekts.

6. Verfahren zum Überwachen der Netzwerkqualität nach Anspruch 2, wobei das Konfigurieren der Verwaltung der TCM ferner Folgendes umfasst: Konfigurieren eines Attributs eines Senders für einen Quellenknoten, der die TCM auf einem Dienst anwendet, und Konfigurieren eines Attributs eines Empfängers für einen Senkenknoten, der die TCM anwendet; und das Durchführen der TCM ferner Folgendes umfasst: Einfügen eines entsprechenden Overhead durch die Netzwerkknoteneinrichtung in einem entsprechenden Quellenknoten, Extrahieren und Überwachen des Overhead in dem Empfänger und Detektieren, ob ein Defekt auftritt oder nicht, nach dem Konfigurieren der Attribute des Senders und des Empfängers; oder
das Konfigurieren der Verwaltung der TCM ferner Folgendes umfasst:
Konfigurieren, ob das manuelle Einfügen eines Sperrsignaldefekts erlaubt wird oder nicht; und das Durchführen der TCM ferner Folgendes umfasst: einem Benutzer wird erlaubt, manuell einen Sperrsignaldefekt in einem Quellenknoten der TCM einzufügen, wenn konfiguriert wird, das manuelle Einfügen des Sperrsignaldefekts zu erlauben.

7. Verfahren zum Überwachen der Netzwerkqualität nach einem der Ansprüche 2 bis 6, wobei das Konfigurieren der TCM ferner das Erweitern eines Fehlerindikationscodes des Fehlertyps und Fehlerorts bzw. FTFL umfasst und das Erweitern des Fehlerindikationscodes des FTFL ferner Folgendes umfasst:
Hinzufügen von Codes zum Identifizieren des TIM-Defekts, eines LTC-Defekts, des Sperrsignaldefekts, eines Defekts einer Offene-Verbindung-Indikation bzw. OCI und
eines Alarmindikationssignaldefekts und von Codes zum Identifizieren verschiedener TCM-Ebenen in dem Fehlerindikationscode;
das Durchführen der TCM ferner Folgendes umfasst:
Schreiben eines Defekttyps und einer entsprechenden TCM-Ebene durch die Netzwerkknoteneinrichtung in dem Fehlerindikationscode nach dem Detektieren eines Defekts.

8. Verfahren zum Überwachen der Netzwerkqualität nach einem der Ansprüche 2 bis 6, wobei nach dem Konfigurieren zum Freigeben der nachfolgenden Aktion des LTC das Durchführen der TCM ferner Folgendes umfasst: Durchführen der Wartungssignaleinfügung nach dem Detektieren eines LTC-Defekts; und nach dem Konfigurieren zum Sperren der nachfolgenden Aktion des LTC das Durchführen der TCM ferner Folgendes umfasst: Nichtdurchführen der Wartungssignaleinfügung nach dem Detektieren eines LTC-Defekts.

9. Verfahren zum Überwachen der Netzwerkqualität nach einem der Ansprüche 2 bis 6, wobei das Konfigurieren zum Freigeben oder Sperren der TCM jeder Ebene ferner Folgendes umfasst: Konfigurieren zum Freigeben oder Sperren einer Quellenfunktion der TCM und Konfigurieren zum Freigeben oder Sperren einer Senkenfunktion der TCM;
wobei, wenn zum Freigeben der Quellenfunktion der TCM konfiguriert wird, das Durchführen der TCM ferner Folgendes umfasst: Ausführen von Funktionen einer Kontrollendgerätequelle der TCM der optischen Kanaldateneinheit bzw. ODU und einer Anpassungsquelle von einer ODU-TCM zu einer ODU; und wenn zum Freigeben der Senkenfunktion der TCM konfiguriert wird, das Durchführen der TCM ferner Folgendes umfasst: Ausführen von Funktionen einer ODU-TCM-Kontrollendgerätesenke und einer Anpassungssenke von der ODU-TCM zu der ODU.

10. Verfahren zum Überwachen der Netzwerkqualität nach Anspruch 4, wobei das Konfigurieren zum Übermitteln der Signalausfallinformationen der TCM zwischen verschiedenen Schichten ferner Folgendes umfasst:
Prompten von Beziehungen zwischen der konfigurierten TCM-Funktion jeder Ebene für einen Benutzer durch die Netzwerkknoteneinrichtung durch eine grafische Schnittstelle, wobei, wenn der Benutzer zustimmt, die Beziehungen bestätigt werden;
und andernfalls die Beziehungen zwischen der konfigurierten TCM-Funktion jeder Ebene justiert werden.

11. Vorrichtung zum Überwachen der Netzwerkqualität, umfassend:
ein Überwachungssteuermodul, das dafür ausgelegt ist, eine Tandemverbindungsüberwachung bzw. TCM zu konfigurieren, zum Freigeben oder
Sperren einer nachfolgenden Aktion eines Tandemverbindungsverlusts bzw. LTC zu konfigurieren und/oder zum Freigeben oder Sperren der TCM jeder Ebene zu konfigurieren, wobei das Konfigurieren der TCM Folgendes umfasst: Konfigurieren eines Anwendungsbereichs der TCM jeder Ebene und Konfigurieren von Beziehungen zwischen mehreren TCM-Funktionen und Beziehungen zwischen den mehreren TCM-Funktionen und einer Querverbindungsfunktion; und
ein Überwachungsausführungsmodul, das dafür ausgelegt ist, die TCM gemäß der Konfiguration durchzuführen, wobei das Durchführen der TCM Folgendes umfasst:
Überwachen von Defekten der TCM jeder Ebene gemäß den Beziehungen zwischen den mehreren TCM-Funktionen und Beziehungen zwischen den mehreren TCM-Funktionen und der Querverbindungsfunktion und auf der Basis einer den Beziehungen entsprechenden Ausführungssequenz.

12. Vorrichtung zum Überwachen der Netzwerkqualität nach Anspruch 11, wobei das Überwachungssteuermodul und das Überwachungsausführungsmodul in einer Zubringereinheit und/oder einer Leitungseinheit angeordnet sind.

13. Vorrichtung zum Überwachen der Netzwerkqualität nach Anspruch 12, die ferner eine Querverbindungseinheit der optischen Kanaldateneinheit bzw. ODU umfasst; wobei die Zubringereinheit ein von einer Client-Seite gesendetes Signal empfängt, ein Overhead anpasst und einfügt und das Signal zu der ODU-Querverbindungseinheit sendet; ein von der ODU-Querverbindungseinheit gesendetes Signal empfängt, das Overhead ent-anpasst und abschließt und das Signal zu der Client-Seite sendet;
die ODU-Querverbindungseinheit dafür ausgelegt ist, ein Signal einer ODU-Schicht zu entsenden; und
die Leitungseinheit ein Overhead für ein Signal anpasst und einfügt und das Signal zu der ODU-Querverbindungseinheit sendet, ein Signal von der ODU-Querverbindungseinheit empfängt und das Overhead ent-anpasst und abschließt.

14. Vorrichtung zum Überwachen der Netzwerkqualität nach Anspruch 12, ferner umfassend:
eine Demultiplexereinheit, die dafür ausgelegt ist, ein Mehrwellenlängensignal in mehrere optische Kanalsignale aufzuteilen und die mehreren optischen Kanalsignale zu mehreren Leitungseinheiten zu senden; und
eine Multiplexereinheit, die dafür ausgelegt ist, die mehreren optischen Kanalsignale von den mehreren Leitungseinheiten miteinander zu kombinieren und das Signal zur Übertragung zu einer optischen Faser zu senden.

## Revendications

1. Procédé de surveillance de la qualité d'un réseau, comprenant :
la configuration d'une surveillance de connexion tandem (TCM) au niveau d'un dispositif de noeud de réseau, la configuration de la TCM comprenant : la configuration d'une étendue d'application de la TCM de chaque niveau, et la configuration de relations parmi une pluralité de fonctions TCM et de relations entre la pluralité de fonctions TCM et une fonction d'interconnexion ;
la configuration d'une activation ou désactivation d'une action ultérieure d'une perte de connexion tandem (LTC), et/ou la configuration d'une activation ou désactivation de la TCM de chaque niveau ; et
l'exécution, par le dispositif de noeud de réseau, de la TCM conformément à la configuration, l'exécution de la TCM comprenant : la surveillance de défauts de la TCM de chaque niveau conformément aux relations parmi la pluralité de fonctions TCM et des relations entre la pluralité de fonctions TCM et la fonction d'interconnexion et selon une séquence d'exécution correspondant aux relations.

2. Procédé de surveillance de la qualité d'un réseau selon la revendication 1, dans lequel la configuration de la TCM comprend en outre : la configuration d'un mode d'utilisation de la TCM ; et l'exécution de la TCM comprend en outre : l'exécution de la TCM conformément au mode d'utilisation configuré ; ou
la configuration de la TCM comprend en outre : la configuration d'une gestion de la TCM ; et l'exécution de la TCM comprend en outre : l'exécution de la TCM conformément à la configuration de gestion ; ou
la configuration de la TCM comprend en outre : la configuration d'une surveillance non intrusive dans une étendue TCM ; et l'exécution de la TCM comprend en outre :
l'exécution de la TCM sur le dispositif de noeud de réseau avec la surveillance non intrusive établie.

3. Procédé de surveillance de la qualité d'un réseau selon la revendication 1, dans lequel la configuration de l'étendue d'application de la TCM de chaque niveau, et la configuration des relations parmi la pluralité de fonctions TCM et des relations entre la pluralité de fonctions TCM et la fonction d'interconnexion comprennent en outre :
l'établissement de noeuds sources et de noeuds récepteurs de TCM de différents niveaux, la configuration d'une relation de séquence d'exécution entre les fonctions TCM de différents niveaux et la fonction d'interconnexion, et la configuration d'une relation de séquence d'exécution parmi les fonctions TCM de différents niveaux ;
l'exécution de la TCM comprend en outre :
l'insertion, par le dispositif de noeud de réseau, d'un surdébit au niveau de chacun des noeuds sources, et l'extraction du surdébit inséré au niveau de chacun des noeuds récepteurs conformément aux noeuds sources et noeuds récepteurs établis ; l'exécution tout d'abord, par l'extrémité source, d'une TCM d'une couche client, puis l'exécution d'une TCM d'une couche serveur, et entre-temps l'exécution en premier d'une TCM avant une interconnexion, puis l'exécution d'une TCM après l'interconnexion conformément à une séquence configurée ; et l'exécution en premier, par l'extrémité réceptrice, de la TCM de la couche serveur, puis l'exécution de la TCM de la couche client, et entre-temps l'exécution en premier de la TCM après l'interconnexion puis l'exécution de la TCM avant l'interconnexion.

4. Procédé de surveillance de la qualité d'un réseau selon la revendication 2, dans lequel la configuration du mode d'utilisation de la TCM comprend en outre : la configuration selon qu'il convient ou non d'effectuer une insertion de signal de maintenance sur une piste de service ultérieure ; et l'exécution de la TCM comprend en outre : l'exécution, par le dispositif de noeud de réseau, de l'insertion de signal de maintenance lors de la surveillance d'un défaut, après avoir configuré une exécution d'une insertion de signal de maintenance sur la piste de service ultérieure ; ou
la configuration du mode d'utilisation de la TCM comprend en outre : la configuration selon qu'il convient ou non de transférer des informations de défaillance de signal de la TCM parmi différentes couches ; et l'exécution de la TCM comprend en outre : le transfert, par le dispositif de noeud de réseau, des informations de défaillance de signal aux TCM de niveaux subordonnés conformément à la séquence d'exécution lors de la surveillance d'un défaut, après avoir configuré un transfert des informations de défaillance de signal de la TCM parmi différentes couches ; ou
la configuration du mode d'utilisation de la TCM comprend en outre : la configuration selon qu'il convient ou non d'adopter des informations de défaillance de signal et des informations de dégradation de signal comme conditions d'une commutation de protection ; et l'exécution de la TCM comprend en outre :
l'exécution, par le dispositif de noeud de réseau, de la commutation de protection lors de la surveillance d'un défaut, après avoir configuré l'adoption des informations de défaillance de signal comme condition de la commutation de protection.

5. Procédé de surveillance de la qualité d'un réseau selon la revendication 4, dans lequel la configuration du mode d'utilisation de la TCM comprend en outre : la configuration de l'activation d'une action ultérieure d'une désadaptation d'identifiant de trace (TIM) ; et
l'exécution de la TCM comprend en outre : l'exécution, par le dispositif de noeud de réseau, de l'insertion de signal de maintenance après avoir détecté un défaut TIM.

6. Procédé de surveillance de la qualité d'un réseau selon la revendication 2, dans lequel la configuration de la gestion de la TCM comprend en outre : la configuration d'un attribut d'un émetteur d'un noeud source appliquant la TCM sur un service, et la configuration d'un attribut d'un récepteur d'un noeud récepteur appliquant la TCM ; et l'exécution de la TCM comprend en outre : l'insertion, par le dispositif de noeud de réseau, d'un surdébit correspondant au niveau d'un noeud source correspondant, l'extraction et la surveillance du surdébit au niveau du récepteur, et le fait de détecter si un défaut se produit ou non, après avoir configuré les attributs de l'émetteur et du récepteur ; ou
la configuration de la gestion de la TCM comprend en outre; : la configuration selon qu'il convient ou non d'autoriser l'insertion manuelle d'un défaut de signal de verrouillage ; et l'exécution de la TCM comprend en outre : l'autorisation à un utilisateur d'insérer manuellement un défaut de signal de verrouillage au niveau d'un noeud source de la TCM, lors d'une configuration autorisant l'insertion manuelle du défaut de signal de verrouillage.

7. Procédé de surveillance de la qualité d'un réseau selon l'une quelconque des revendications 2 à 6, dans lequel la configuration de la TCM comprend en outre l'extension d'un code d'indication de panne d'un type de panne et d'un emplacement de panne (FTFL), et l'extension du code d'indication de panne FTFL comprend en outre :
l'ajout de codes pour identifier le défaut TIM, un défaut LTC, le défaut de signal de verrouillage, un défaut d'indication de connexion ouverte (OCI), et un défaut de signal d'indication d'alarme, et de codes pour identifier différents niveaux TCM dans le code d'indication de panne ;
l'exécution de la TCM comprend en outre :
l'écriture, par le dispositif de noeud de réseau, d'un type de défaut et d'un niveau TCM correspondant dans le code d'indication de panne après avoir détecté un défaut.

8. Procédé de surveillance de la qualité d'un réseau selon l'une quelconque des revendications 2 à 6, dans lequel après la configuration d'une activation de l'action ultérieure de la LTC, l'exécution de la TCM comprend en outre : l'exécution de l'insertion du signal de maintenance après avoir détecté un défaut LTC ; après la configuration d'une désactivation de l'action ultérieure de LTC, l'exécution de la TCM comprend en outre : la non-exécution de l'insertion de signal de maintenance après la détection d'un défaut LTC.

9. Procédé de surveillance de la qualité d'un réseau selon l'une quelconque des revendications 2 à 6, dans lequel la configuration d'une activation ou désactivation de la TCM de chaque niveau comprend en outre : la configuration de l'activation ou désactivation d'une fonction source de la TCM et la configuration d'activation ou de désactivation d'une fonction réceptrice de la TCM ;
lors d'une configuration d'une activation de la fonction source de la TCM, l'exécution de la TCM comprend en outre : l'exécution de fonctions d'une source terminale de piste TCM à unités de données de canal optique (ODU) et d'une source d'adaptation d'une TCM ODU en une ODU ; lors d'une configuration d'une activation de la fonction réceptrice de la TCM, l'exécution de la TCM comprend en outre :
l'exécution de fonctions d'un récepteur terminal de piste TCM ODU et d'un récepteur d'adaptation de la TCM ODU en ODU.

10. Procédé de surveillance de la qualité d'un réseau selon la revendication 4, dans lequel la configuration du transfert des informations de défaillance de signal de la TCM parmi différentes couches comprend en outre :
l'incitation, par le dispositif de noeud de réseau, de relations parmi la fonction TCM configurée de chaque niveau avec un utilisateur par le biais d'une interface graphique, où si l'utilisateur accepte, les relations sont confirmées ; sinon les relations parmi la fonction TCM configurée de chaque niveau sont ajustées.

11. Appareil de surveillance de la qualité d'un réseau, comprenant :
un module de commande de surveillance, adapté pour configurer une surveillance de connexion tandem (TCM), configurer l'activation ou la désactivation d'une action ultérieure d'une perte de connexion tandem (LTC), et/ou configurer une activation ou désactivation de la TCM de chaque niveau, la configuration de la TCM comprenant :
la configuration d'une étendue d'application de la TCM de chaque niveau, et la configuration de relations parmi une pluralité de fonctions TCM et de relations entre la pluralité de fonctions TCM et une fonction d'interconnexion ; et
un module d'exécution de surveillance, adapté pour effectuer la TCM conformément à la configuration, l'exécution de la TCM comprenant : la surveillance de défauts de la TCM de chaque niveau conformément aux relations parmi la pluralité de fonctions TCM et les relations entre la pluralité de fonctions TCM et la fonction d'interconnexion et selon une séquence d'exécution correspondant aux relations.

12. Appareil de surveillance de la qualité d'un réseau selon la revendication 11, dans lequel le module de commande de surveillance et le module d'exécution de surveillance sont disposés dans une unité tributaire et/ou une unité de ligne.

13. Appareil de surveillance de la qualité d'un réseau selon la revendication 12, comprenant en outre une unité d'interconnexion d'unités de données de canal optique (ODU) ;
dans lequel l'unité tributaire reçoit un signal émis depuis un côté client, adapte et insère un surdébit, et transmet le signal à l'unité d'interconnexion ODU ; reçoit un signal émis depuis l'unité d'interconnexion ODU, désadapte le surdébit et y met fin, et transmet le signal au côté client ;
l'unité d'interconnexion ODU est adaptée pour expédier un signal d'une couche ODU ; et
l'unité de ligne adapte et insère un surdébit à un signal, et transmet le signal à l'unité d'interconnexion ODU, reçoit un signal depuis l'unité d'interconnexion ODU, désadapte le surdébit et y met fin.

14. Appareil de surveillance de la qualité d'un réseau selon la revendication 12, comprenant en outre :
une unité de démultiplexage, adaptée pour diviser un signal à longueurs d'onde multiples en une pluralité de signaux de canaux optiques et transmettre la pluralité de signaux de canaux optiques à une pluralité d'unités de lignes ; et
une unité de multiplexage, adaptée pour combiner ensemble la pluralité de signaux de canaux optiques provenant de la pluralité d'unités de ligne et transmettre le signal à une fibre optique unique en vue de sa transmission.
